(19) Europäisches Patentamt / European Patent Office / Office européen des brevets

(11) **EP 4 180 556 A1**

(12) **EUROPEAN PATENT APPLICATION**
published in accordance with Art. 153(4) EPC

(43) Date of publication:
**17.05.2023 Bulletin 2023/20**

(21) Application number: **21900604.6**

(22) Date of filing: **30.11.2021**

(51) International Patent Classification (IPC):
**C25B 9/00** (2021.01)        **C25B 15/02** (2021.01)
**C25B 15/08** (2006.01)

(52) Cooperative Patent Classification (CPC):
**C25B 9/00; C25B 15/02; C25B 15/08;** Y02E 60/36

(86) International application number:
**PCT/JP2021/043922**

(87) International publication number:
**WO 2022/118851 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 JP 2020200484**

(71) Applicant: **Miwa Kankyo Co., Ltd.**
**Tokyo 106-0031 (JP)**

(72) Inventors:
• **MIWA, Yuko**
  **Tokyo 106-0031 (JP)**
• **FUNATSU, Tsuyoshi**
  **Akishima-shi Tokyo 196-0001 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **OXYGEN-HYDROGEN MIXED GAS GENERATION DEVICE**

(57)    Topic: The purpose is to provide an oxygen and hydrogen mixed gas generator and a method for producing oxygen and hydrogen mixed gas stably by electrolyzing, and the resulting oxygen and hydrogen mixed gas thereto. Solution: an oxygen hydrogen mixed gas generator (1) is provided with an electrolyze device (10), wherein a first electrode (11) and a second electrode (12) are immersed in water for electrolyzing; and a power supply device (50), supplies the specified current to the first electrode (11) and the second electrode (12), the oxygen hydrogen mixed gas generator (1) mixes the oxygen and hydrogen generated from the electrodes to produce the oxygen hydrogen mixed gas, which is characterized in that the power supply device (50) reverses the polarity of the first electrode (11) and the second electrode (12) alternately.

Fig.1

EP 4 180 556 A1

# Description

## Technical Field

The invention relates to an oxygen hydrogen mixed gas generator.

## Background Art

Previously, the oxygen hydrogen mixed gas is known. The oxygen hydrogen mixed gas, also known as Brownian gas or HHO gas, is a general term for gases obtained by mixing hydrogen with oxygen at a molar ratio of 2:1.

With respect to a device for producing such the oxygen hydrogen mixed gas (the oxygen hydrogen mixed gas generator), reference can be made, for example, to the technology published in patent Document 1.

## Prior Art Document

## Patent Document

Patent Document 1: Japanese special bulletin No. 2002-129369.

## Summary Of The Invention

## Problems To Be Solved By Invention

However, the corrosion of the electrodes of the above oxygen hydrogen mixed gas generator due to electrolysis has become a problem.

The invention is completed in view of the above conditions, and aims to provide an oxygen hydrogen mixed gas generator capable of inhibiting the corrosion of the electrodes.

## Means For Solving Problems

In order to achieve the above purpose, the oxygen hydrogen mixed gas generator of the present invention includes: an electrolyze device, which uses electrodes to electrolyze water; and a power supply device, which supplies a specified current to the electrodes. The oxygen hydrogen mixed gas generator produces the oxygen hydrogen mixed gas, which is characterized in that a plurality of electrodes are arranged in parallel at specified intervals, and flow holes are arranged in the electrodes to allow water to flow in an overflow manner and/or to allow atomized water to flow.

According to the invention, the corrosion of the electrodes can be inhibited by providing flow holes in the electrodes that allow water to flow in the overflow manner and/or allow atomized water to flow. That is, the corrosion of electrodes often occurs in the holes impregnated with water. The flow holes are formed by allowing water to flow in the overflow manner and/or allow atomized water to flow, so as to reduce the immersion of water in the flow holes and inhibit the corrosion of the electrodes.

The flow holes are arranged between the adjacent electrodes in a zigzag shape, so that when the atomized water flows from the electrodes on the upstream side to the adjacent electrodes on the downstream side through the flow holes, the water can flow in a manner that conflicts with the occluded electrode portions of the adjacent electrodes on the downstream side, and the water flows reliably to the adjacent electrodes on the downstream side.

By arranging the flow holes, when the flow holes on the upstream side are projected to the electrodes adjacent to the downstream side, the projected flow holes on the upstream side overlap with the occluded electrode portions positioned beyond the flow holes which on the adjacent electrodes on the downstream side, and the atomized water can flow in a manner that reliably conflicts with to the occluded electrode portions of the electrodes adjacent to the downstream side.

The area of the flow holes closer to the downstream side that becomes smaller, so that the blocked electrode portions of the electrodes beyond the flow holes which closer to the downstream side that becomes larger, and closer to the downstream side, the atomized water is more likely to conflict with the occluded electrode portions of the electrodes. Therefore, water can be uniformly supplied to the electrodes on the downstream side.

The positions of the lower end sides of the flow holes are consistent between the adjacent electrodes, so that the area of the lower electrode portions from the lower end sides of the flow holes between the adjacent electrodes can be equal, and the production efficiency of the oxygen hydrogen mixed gas between the adjacent electrodes can be equal.

The flow holes are arranged as the through holes, and a material for inhibiting corrosion is arranged at the periphery of the through holes at least, so as to inhibit the corrosion of the electrodes generated through the through holes effectively.

The material for inhibiting corrosion can be arranged at the periphery of the through holes in a film form.

A liquid liner is coated at the periphery of the through holes and the material for inhibiting corrosion can be arranged at the periphery of the through holes in a film form.

The oxygen hydrogen mixed gas generator has a water supply section that supplies water intermittently to the electrodes, and the electrolyze device can be arranged as a structure that supplies water intermittently to the electrodes.

The flow holes extend in a long strip along the direction which intersects with the flow direction of water, the flow amount of water can be increased.

The power supply device has the following structure: controlling the switching time of the current, controlling the waveform of the current, and supplying the current intermittently.

The power supply device performs the control of switching off the supply of current when the water supply of the water supply section is switched on, and performs the control of switching on the supply of current when the water supply of the water supply section is switched off. In more detail, water inflow holes are provided for allowing the water supplied by the water supply section to flow in, and a detector is provided, which detects the level of water supplied between adjacent electrodes, and the water supply section supplies water based on the level detected by the detector. The power supply device performs the control of switching off the supply of current when the water supply of the water supply section is switched on, and performs the control of switching on the supply of current when the water supply of the water supply section is switched off, so as to inhibit the corrosion of the electrodes.

That is, it is prone to the corrosion of the electrodes when electrolysis is carried out under the condition of water flowing. By controlling the supply of current when the water supply of the water supply section is switched off, the electrolysis can be carried out when the water flow is less, and the corrosion of the electrodes can be inhibited.

The water supply section performs the control of reducing the supply of water relatively when the current supply of the power supply device is switched on, and performs the control of increasing the supply of water relatively when the current supply of the power supply device is switched off. In more detail, water inflow holes are provided for allowing the water supplied by the water supply section to flow in, and a detector is provided, which detects the level of water supplied between adjacent electrodes, and the water supply section supplies water based on the level detected by the detector. The water supply section performs the control of reducing the supply of water relatively when the current supply of the power supply device is switched on, and performs the control of increasing the supply of water relatively when the current supply of the power supply device is switched off, so as to the electrolysis can be carried out when the water flow is less, and the corrosion of the electrodes can be inhibited.

Water outflow holes are provided for allowing the water to flow out, and the oxygen hydrogen mixed gas generator is provided with a water outflow part, so that water supplied to the adjacent electrodes on the upstream side relative to the electrodes closest to the downstream side among the plurality of electrodes arranged in parallel that flows out through the water outflow holes, and the water outflow part intermittently flows out of the water. In more detail, the oxygen hydrogen mixed gas generator is provided with water outflow holes allowing the water to flow out, and is provided with a water outflow part, so that water supplied to the electrodes closest to the downstream side and the adjacent electrodes on the upstream side relative to the electrodes closest to the downstream side among the plurality of electrodes arranged in parallel that flows out through the water outflow holes, and the oxygen hydrogen mixed gas generator is provided with a detector to detect the liquid level of the water supplied to the adjacent electrodes, and the water outflow part intermittently flows out the water based on the liquid level detected by the detector, so as to inhibit the corrosion of the electrodes.

That is, it is prone to the corrosion of the electrodes when electrolysis is carried out under the condition of water flowing. By controlling of reducing the flow of water between adjacent electrodes when the outflow of water of the water outflow part is switched off, and the corrosion of the electrodes can be inhibited.

A sealing ring is clamped between the edges of adjacent electrodes, and through holes are arranged at the edge of the electrodes and on the sealing ring, and a pipe component is inserted through the through holes at the edge of the electrodes and the through holes of the sealing ring. At the same time, a fastening component is further inserted through the pipe component. The edges of the electrode are fastened in a manner of crimping by clamping the sealing ring between the edges of the adjacent electrodes by the fastening component. Therefore, the adjacent electrodes can be fastened in the manner of crimping.

The hole diameter of the through holes of the sealing ring is approximately equal to the outer diameter of the pipe component inserted into the through holes of the sealing ring, and the sealing ring is composed of elastic materials. The edges of the electrodes are fastened in a manner of crimping by clamping the sealing ring between the edges of the adjacent electrodes by the fastening component, so that the following structure can be obtained: the through holes of the sealing ring extend more inward, and the hole diameter of the through holes of the seal ring is smaller, and the outer surface side of the pipe component is close to the inner side of the through holes of the seal ring. Therefore, water leakage from the gap between the outer surface side of the pipe components and the inner side of the through holes of the seal ring can be restrained.

Effect Of Invention

According to the invention, the corrosion of the electrodes can be inhibited.

Brief Description Of The Drawings

Figure 1 shows the overall structure of the oxygen hydrogen mixed gas generator according to an embodiment of the invention.
Figure 2 shows the structure of the electrolyze device and the water supply device of the oxygen hydrogen mixed gas generator.

Figure 3 is an enlarged side view of the structure of the electrolyze device.

Figure 4 is a front view of the section A-A of Figure 3, in which the structure of the electrode is enlarged.

Figure 5 is a front view of the enlarged structure of the electrode and seal ring related to Figure 4.

Figure 6 is the front view of section B-B of Figure 3, in which the structure of the electrode is enlarged.

Figure 7 is a front view of the enlarged structure of the electrode and seal ring related to Figure 6.

Figure 8 is the front view of the section C-C of Figure 3, in which the structure of the electrode is enlarged.

Figure 9 is a front view of the enlarged structure of the electrode and seal ring related to Figure 8.

Figure 10 is a diagram showing a structure used to inhibit corrosion of the electrolyze device, wherein (a) is a front view showing the structure of the water inflow hole and the water outflow hole, and (b) is a D-D side sectional view showing the structure of the water inflow hole and the water outflow hole in Figures 4, 5, 8, and 9.

Figure 11 is another diagram showing a structure used to inhibit corrosion of the electrolyze device, wherein (a) is a front view showing the structure of the flow hole, and (b) is a E-E side sectional view showing the structure of the flow hole in Figures 6, 7, 8, and 9.

Figure 12 is another diagram showing a structure used to inhibit corrosion of the electrolyze device, wherein (a) is a front view showing the structure of the connecting hole, and (b) is a F-F side sectional view showing the structure of the connecting hole in Figures 4, 6, 7, 8, and 9.

Figure 13 is a perspective view showing a fastening state based on the fastening components in the electrolyze device.

Figure 14 is a diagram showing a water supply method of the water supply device, wherein (a) is a diagram showing the intermittent supply of water, and (b) is a diagram showing the continuous supply of water.

Figure 15 shows the structure of a power supply device of the oxygen hydrogen mixed gas generator.

Figure 16 is a diagram showing a first circuit of the power supply device.

Figure 17 is a diagram showing a second circuit of the power supply device.

Figure 18 is a diagram showing the output waveform of the current of the power supply device, wherein (a) is a diagram showing the output waveform from an AC power supply, (b) is a diagram showing the output waveform from a converter line, and (c) is a diagram showing the output waveform based on a smoothing unit.

Figure 19 is a subsequent diagram of Figure 18 showing the output waveform of the current of the power supply device, wherein (a) is a diagram showing the output waveform from a pulse cut-off line and a polarity reversal line, and (b) is a diagram showing the output waveform from a current control line.

Figure 20 is a diagram showing the output waveform of the current when the polarity reversal line is switched off in the power supply device.

Figure 21 is a diagram showing the output waveform of the current when the pulse cut-off line and the polarity reversal line are switched off in the power supply device.

Figure 22 is a diagram for explaining a first structure of the oxygen hydrogen mixed gas generator, wherein (a) is a diagram showing the water supply in the water supply device, (b) is a diagram showing the output waveform of the current in the power supply device, and (c) is a diagram showing the producing of the oxygen hydrogen mixed gas.

Figure 23 is a diagram for explaining a second structure of the oxygen hydrogen mixed gas generator, wherein (a) is a diagram showing the water supply in the water supply device, (b) is a diagram showing the output waveform of the current in the power supply device, and (c) is a diagram showing the producing of the oxygen hydrogen mixed gas.

Figure 24 is a diagram for explaining a third structure of the oxygen hydrogen mixed gas generator, wherein (a) is a diagram showing the supply of water in the water supply device, (b) is a diagram showing the output waveform of the current in the power supply device, and (c) is a diagram showing the producing of the oxygen hydrogen mixed gas.

Figure 25 is a flowchart for explaining a method for producing mixed gas based on the oxygen hydrogen mixed gas generator.

Figure 26 shows the structure of the oxygen hydrogen mixed gas generator according to other embodiments of the invention.

Figure 27 is another diagram showing the structure of the oxygen hydrogen mixed gas generator according to other embodiments of the invention.

Figure 28 is another diagram showing the structure of the oxygen hydrogen mixed gas generator according to other embodiments of the invention.

Figure 29 is another diagram showing the structure of the oxygen hydrogen mixed gas generator according to other embodiments of the invention.

Figure 30 is another diagram showing the structure of the oxygen hydrogen mixed gas generator according to other embodiments of the invention.

Figure 31 shows the overall structure of a suction device according to an embodiment of the present invention.

Figure 32 shows the structure of an electrolyze device and a water supply device of the suction device.

Figure 33 shows the structure of the suction apparatus.

Figure 34 is a diagram showing a modified example of the suction apparatus.

Figure 35 is a diagram showing another modified example of deformation of the suction apparatus.

Figure 36 shows a modified example of the oxygen hydrogen mixed gas generator of the present invention.

Figure 37 shows another modified example of the oxygen hydrogen mixed gas generator.

Figure 38 shows another modified example of the oxygen hydrogen mixed gas generator.

Figure 39 shows another modified example of the oxygen hydrogen mixed gas generator.

Figure 40 shows another modified example of the oxygen hydrogen mixed gas generator.

Figure 41 is a front view showing another modified example of the oxygen hydrogen mixed gas generator.

Figure 42 is a front view showing another modified example of the oxygen hydrogen mixed gas generator.

Figure 43 is a front view showing another modified example of the oxygen hydrogen mixed gas generator.

Embodiments

Hereinafter, the embodiments of the present invention are described in detail with reference to the drawings.

[Structure of the oxygen hydrogen mixed gas generator]

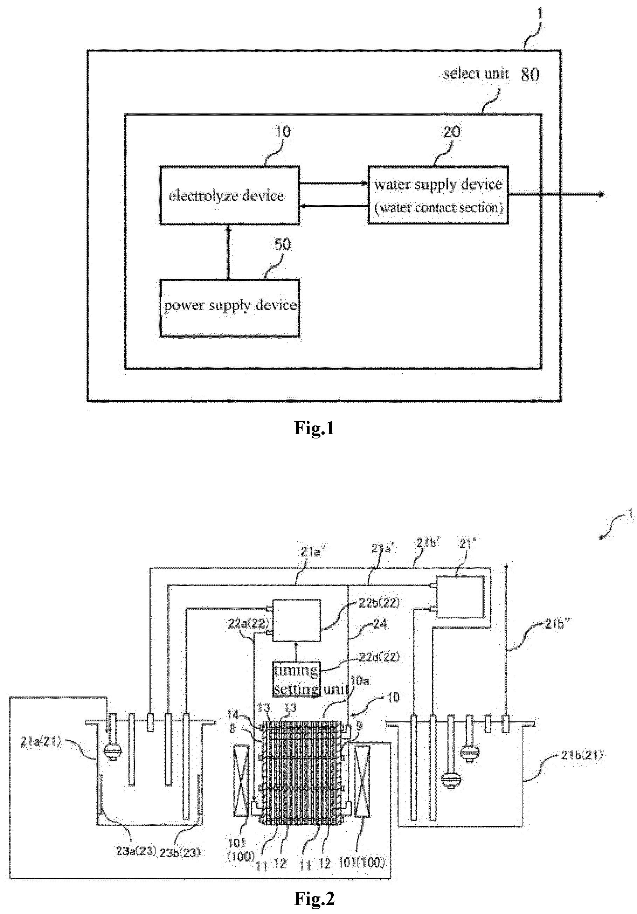

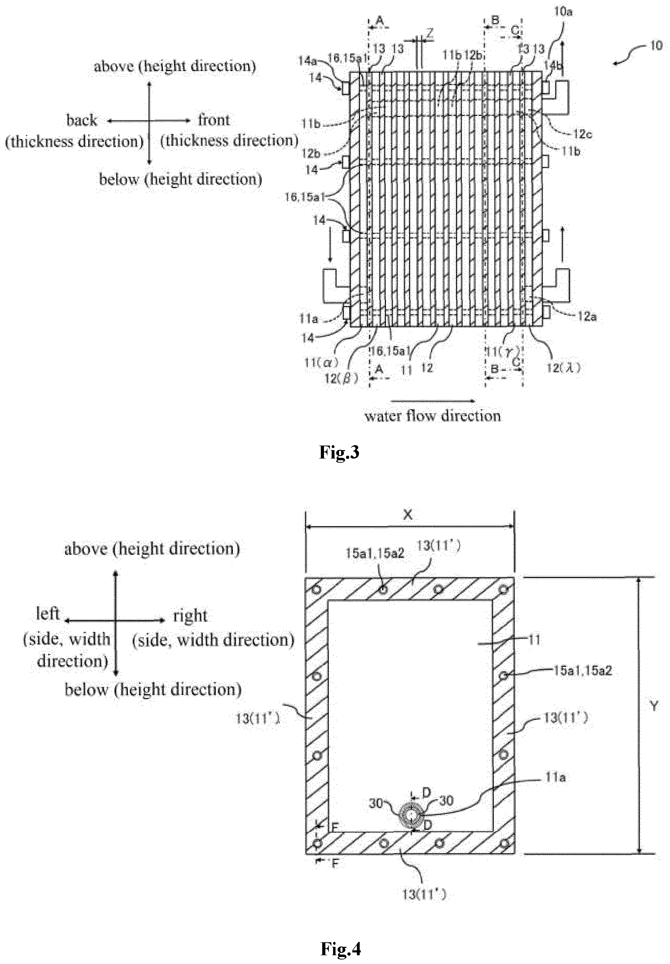

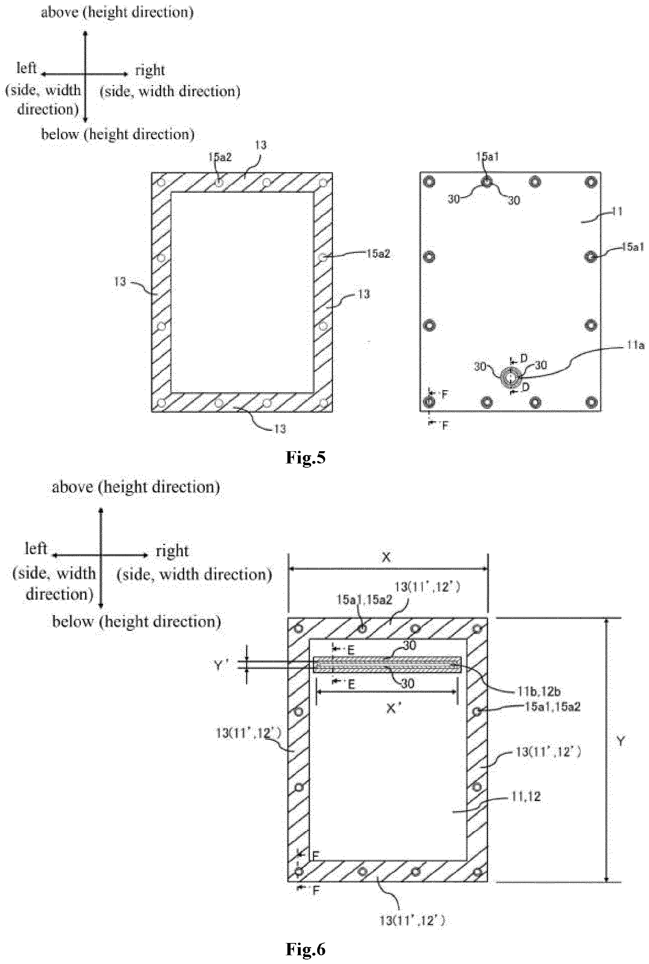

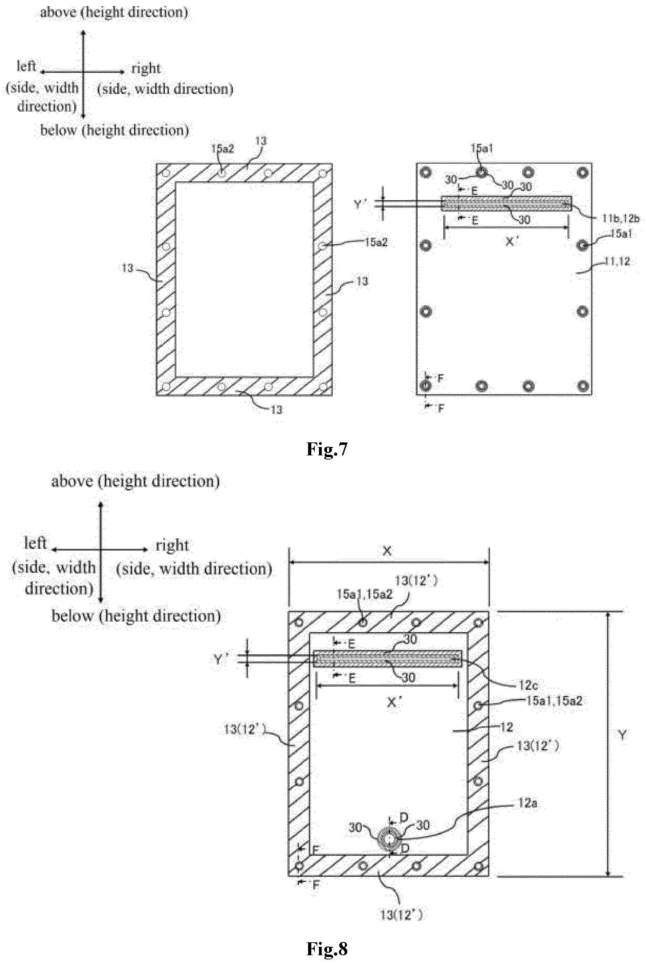

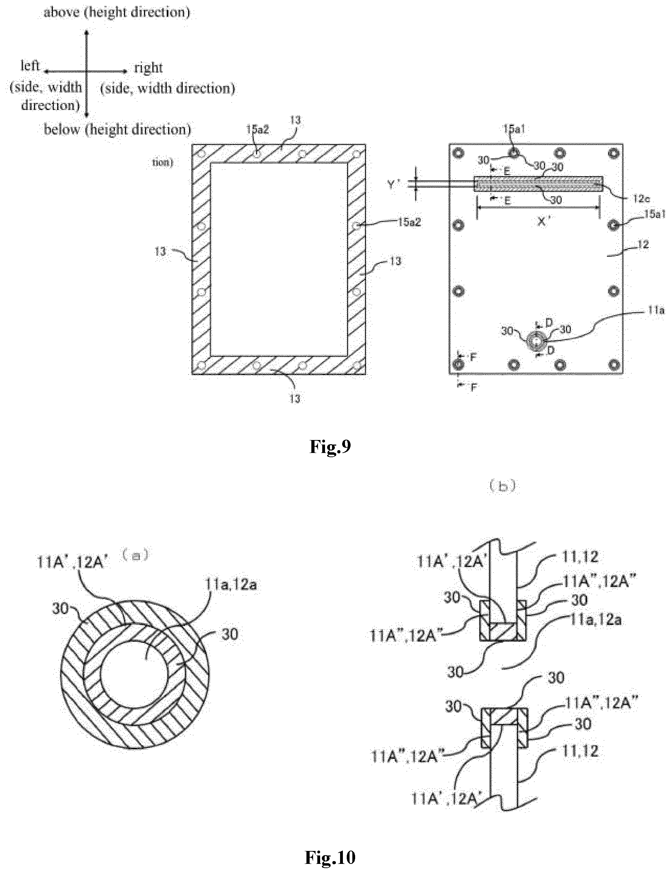

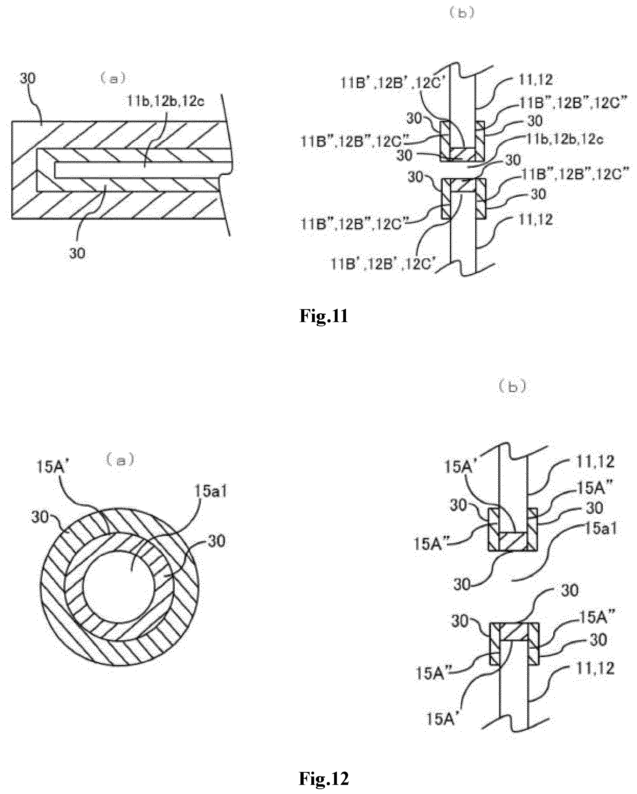

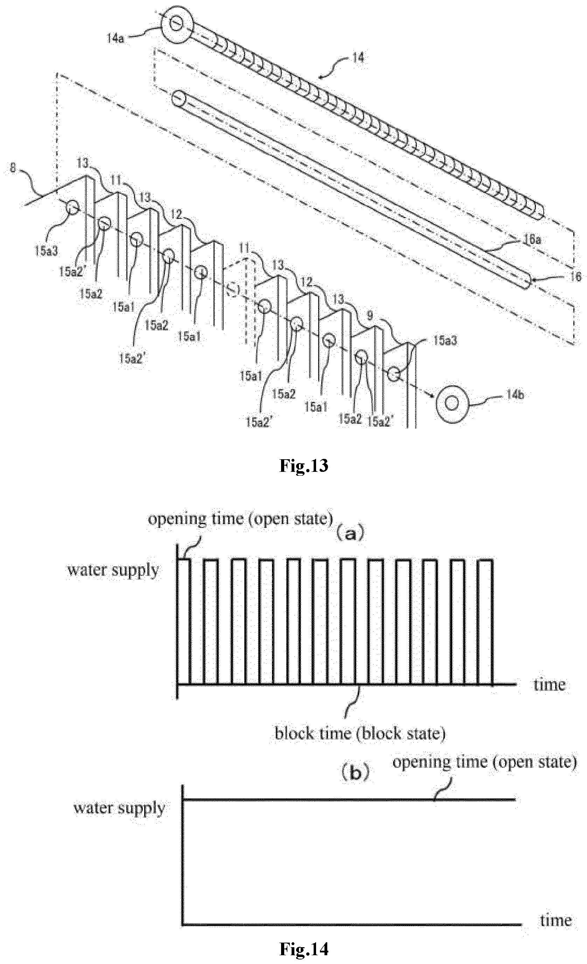

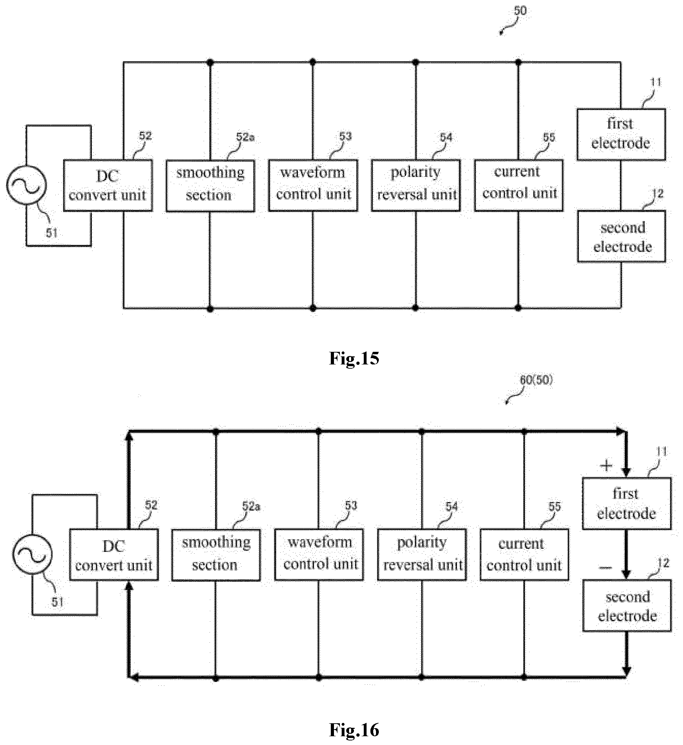

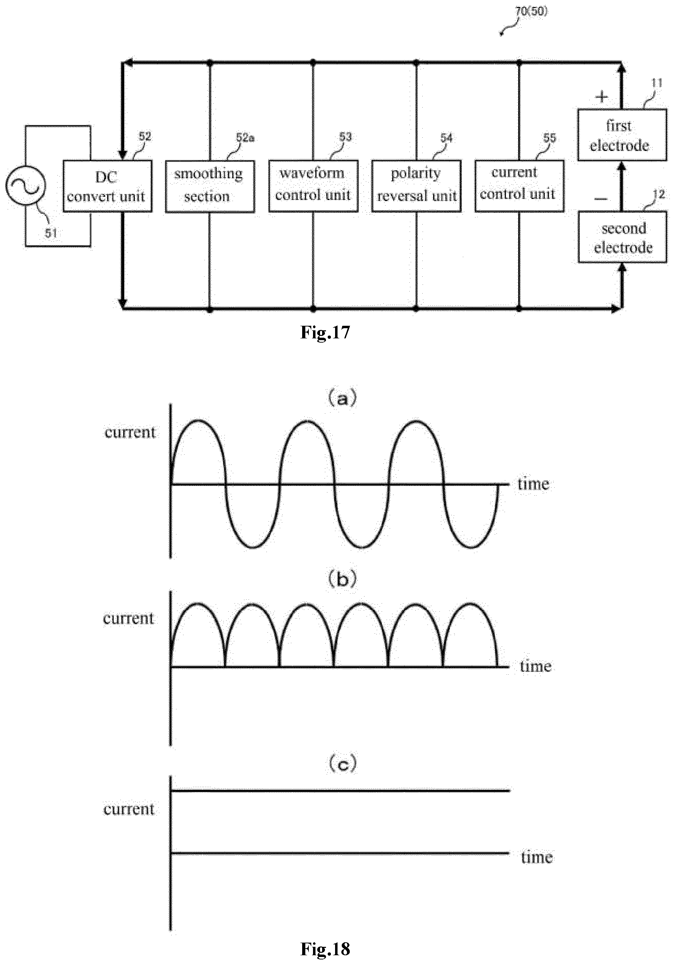

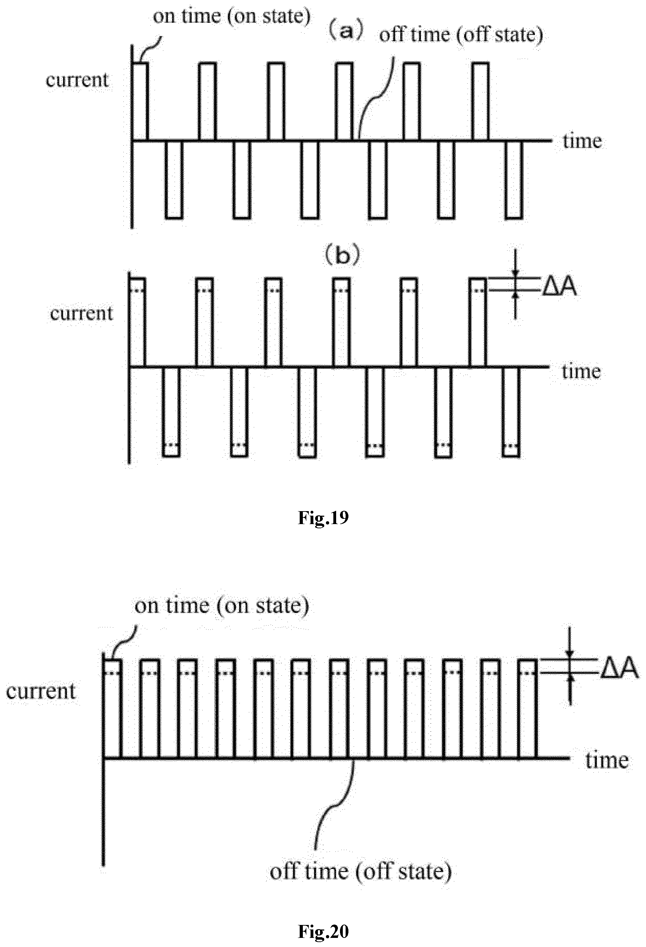

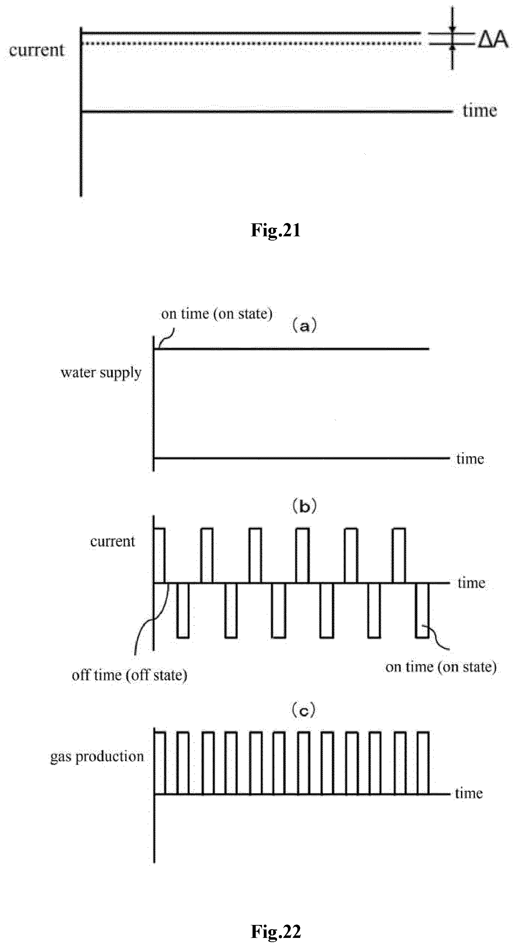

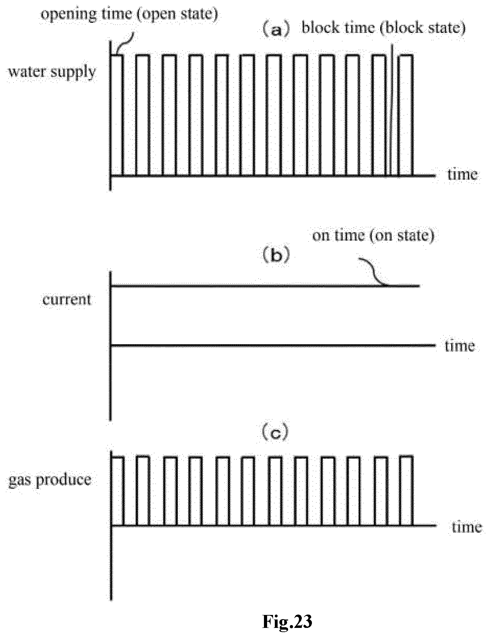

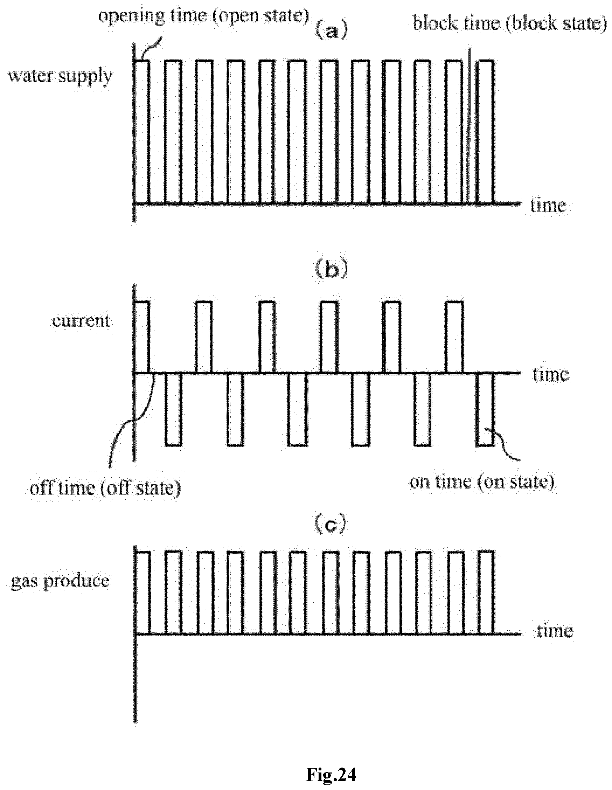

Figure 1 shows the overall structure of the oxygen hydrogen mixed gas generator according to an embodiment of the invention, Figure 2 shows the structure of the electrolyze device and the water supply device of the oxygen hydrogen mixed gas generator, Figure 3 is an enlarged side view of the structure of the electrolyze device, Figure 4 is a front view of the section A-A of Figure 3, in which the structure of the electrode is enlarged, Figure 5 is a front view of the enlarged structure of the electrode and seal ring related to Figure 4, Figure 6 is the front view of section B-B of Figure 3, in which the structure of the electrode is enlarged, Figure 7 is a front view of the enlarged structure of the electrode and seal ring related to Figure 6, Figure 8 is the front view of the section C-C of Figure 3, in which the structure of the electrode is enlarged, Figure 9 is a front view of the enlarged structure of the electrode and seal ring related to Figure 8, Figure 10 is a diagram showing a structure used to inhibit corrosion of the electrolyze device, Figure 11 is another diagram showing a structure used to inhibit corrosion of the electrolyze device, Figure 12 is another diagram showing a structure used to inhibit corrosion of the electrolyze device, Figure 13 is a perspective view showing a fastening state based on the fastening components in the electrolyze device, Figure 14 is a diagram showing a water supply method of the water supply device, Figure 15 shows the structure of a power supply device of the oxygen hydrogen mixed gas generator, Figure 16 is a diagram showing a first circuit of the power supply device, Figure 17 is a diagram showing a second circuit of the power supply device, Figure 18 is a diagram showing the output waveform of the current of the power supply device, Figure 19 is a subsequent diagram of Figure 18 showing the output waveform of the current of the power supply device, Figure 20 is a diagram showing the output waveform of the current when the polarity reversal line is switched off in the power supply device, Figure 21 is a diagram showing the output waveform of the current when the pulse cut-off line and the polarity reversal line are switched off in the power supply device, Figure 22 is a diagram for explaining a first structure of the oxygen hydrogen mixed gas generator, Figure 23 is a diagram for explaining a second structure of the oxygen hydrogen mixed gas generator, Figure 24 is a diagram for explaining a third structure of the oxygen hydrogen mixed gas generator. In addition, each direction in the following description is specified as the direction indicated in the Figures.

Referring to Figure 1 and 2, the outline of the oxygen hydrogen mixed gas generator 1 (also known as Brownian gas generator 1, HHO gas generator 1, the same below) according to the embodiments of the present invention is described. The oxygen hydrogen mixed gas generator 1 is composed of an electrolyze device 10, a water supply device 20, a power supply device 50 and a select unit 80. It can intermittently produce oxygen mixed gas (also known as Brownian gas, HHO gas, the same below).

As enlarged in Figures 3 to 13, the electrolyze device 10 has an electrolyze chamber 10a and electrodes 11 and 12, the electrodes 11 and 12 include a first electrode 11 and a second electrode 12. The electrolyze device 10 can use the first electrode 11 and the second electrode 12 to electrolyze water. The first electrode 11 and the second electrode 12 are arranged as the rectangular and plate shape, and a plurality of plate shaped first electrodes 11 and second electrodes 12 are arranged in parallel in a manner of alternating opposite positions at specified intervals (hereinafter, the first electrodes 11 and the second electrodes 12 are sometimes referred to as electrodes 11 and 12 for short).

In this embodiment, the first electrode 11 is 7, the second electrode 12 is 7, and the size Z of the interval between the first electrode 11 and the second electrode 12 is 1 mm to 2 mm. Oxygen hydrogen mixed gas can be produced between these electrodes 11 and 12. The length dimension (length dimension in width direction) X of the sides of the first electrode 11 and the second electrode 12 is 90mm, the length dimension Y in height direction is 140mm, and the length dimension in thickness direction is 0.8mm. The electrodes 11 and 12 can include at least any one of stainless steel, titanium and platinum. That is, the electrodes 11 and 12 can be the stainless steel electrodes 11 and 12. In addition, the electrodes 11 and 12 can be the electrodes obtained by coating platinum on titanium. Further, the electrodes can be other materials that can be electrically charged. The upstream side of the electrode $11(\alpha)$ closest to the upstream side in a direction of the flow of water, atomized water, or oxygen and hydrogen mixed gas (hereinafter referred to as the direction of the flow of water or water etc.) and the downstream side of the electrode $12(\lambda)$ closest to the downstream side in the direction of the flow of water etc. are provided with clamping plates 8, 9, so that the electrodes 11 and 12 are clamped by the clamping plates 8 and 9.

Here, the following structure is formed: in the oxygen hydrogen mixed gas generator 1, a rectangular and frame shaped specified seal ring 13 is clamped between the edges 11' and 12' of adjacent electrodes 11 and 12, and between the edges 11' of the electrode $11(\alpha)$ closest to the upstream side in the direction of the flow of water etc. and the edge of the clamping plate 8, and between the edges 12' of the electrode $12(\lambda)$ closest to the downstream side in the direction of the flow of water etc. and the edge of the clamping plate 9. Circular through holes 15a1, 15a2 and 15a3 are arranged on the edges 11', 12' of electrodes 11, 12, the sealing ring 13 and the edges of clamping plates 8 and 9, which run in the front and back directions. A pipe component 16 is inserted through the through hole 15a1 of the electrodes 11', 12', the through hole 15a2 of the sealing rings 13 and the through hole 15a3 of clamping plates 8 and 9. The pipe component 16 is composed of resin, plastic, rubber and other insulators. At the same time, a fastening member 14 is further inserted through the pipe component 16, which comprises an axial bolt 14a and a nut 14b. That is, when the seal ring 13 is clamped between the edges 11' and 12' of adjacent electrodes 11 and 12, and between the edges 11' of the electrode $11(\alpha)$ closest to the upstream side in the direction of the flow of water etc. and the edge of the clamping plate 8, and between the edges 12' of the electrode $12(\lambda)$ closest to the downstream side in the direction of the flow of water etc. and the edge of the clamping plate 9, the edges 11' and 12' of the adjacent electrodes 11 and 12, the edges 11' of the electrode $11(\alpha)$ and the edge of the clamping plate 8, the edges 12' of the electrode $12(\lambda)$ and the edge of the clamping plate 9 are fastened in a manner of crimping by the fastening component. Therefore, the electrodes 11, 12 can be insulated from the fastening component 14 by the pipe component 16, while the adjacent electrodes 11, 12, the edges 11' of the electrode $11(\alpha)$ and the edge of the clamping plate 8, the edges 12' of the electrode $12(\lambda)$ and the edge of the clamping plate 9 are fastened in the manner of crimping.

Moreover, it is set that before the fastening based on the fastening component 14, namely, in the static state, the hole diameter of the through hole 15a1 of the electrodes 11 and 12, of the through hole 15a2 of the seal ring 13 and of the through hole 15a3 of the clamping plates 8 and 9 is approximately equal to the outer diameter of the pipe component 16 inserted into the through holes 15a1, 15a2, 15a3 (which includes the condition that the hole diameter of the through holes 15a1, 15a2, 15a3 is larger than the outer diameter of the pipe component 16 by a specified amount of clearance). The sealing ring 13 is composed of elastic materials such as rubber. When the seal ring 13 is clamped between the edges 11' and 12' of the electrodes 11 and 12, and between the edges 11' of the electrode $11(\alpha)$ and the edge of the clamping plate 8, and between the edges 12' of the electrode $12(\lambda)$ and the edge of the clamping plate 9, the adjacent electrodes 11 and 12, the edges 11' of the electrode $11(\alpha)$ and the edge of the clamping plate 8, the edges 12' of the electrode $12(\lambda)$ and the edge of the clamping plate 9 are fastened in a manner of crimping by the fastening component. Thus, it is composed of: the through hole 15a2 of the sealing ring extend more inward, and the hole diameter of the through hole 15a2 of the seal ring is smaller, and the outer surface side 16a of the pipe component 16 is close to the inner side 15a2' of the through hole 15a2 of the seal ring 13. It is a following structure: a plurality of fastening components 14 are penetrated and inserted into each edge 11' and 12' through the through holes 15a1, 15a2, 15a3 and the pipe component 16, and the adjacent electrodes 11 and 12 are fastened in a plurality of positions by the clamping plates 8 and 9. Therefore, water leakage from the gap between the outer surface side 16a of the pipe component 16 and the inner side 15a2' of the through hole 15a2 of the seal ring 13 can be restrained.

Water inflow hole 11a, flow hole 11b, 12b, gas outflow hole 12c and water outflow hole 12a are arranged on the first electrode 11 and the second electrode 12 in plate shape. The water inlet hole 11a, the flow holes 11b, 12b, the gas outlet hole 12c, and the water outlet hole 12a are the through holes running in the front and rear directions (the water inflow hole 11a and the water outlet hole 12a are arranged closer to the lower position than the liquid level in the electrolyze chamber 10a, usually a state that impregnated with water).

That is, in the direction of the flow of water etc., the lower side of the electrode $11(\alpha)$ closest to the upstream side is provided with a water inflow hole 11a (which is a structure without flow holes 11b and 12b on the upper side) for water inflow. The water inflow hole 11a is used to allow the water supplied from the water supply section 22 described later to flow between the electrodes 11 and 12. The water flowing from the water inflow hole 11a causes the water level to rise between the electrodes $11(\alpha)$ and $12(\beta)$ closest to the upstream side in the direction of the flow of water etc., and reaches the flow hole 12b on the upper side. The water inflow hole 11a is circular.

In addition, flow holes 11b and 12b (it is a structure without water inflow hole 11a and water outflow hole 12a on the lower side) are provided on the electrode $11(\alpha)$ closest to the upstream side and on the electrode $11(\gamma)$ adjacent to the electrode $12(\lambda)$ which closest to the downstream side in the direction of the water etc. flowing from the adjacent electrode $12(\beta)$. The flow holes 11b and 12b allow the liquid water flowing from the water inflow hole 11a to overflow to the next electrodes 11 and 12 (between the electrodes 12 and 11) (the flow holes 11b and 12b allow the liquid water flowing from the water inflow hole 11a to overflow and flowing from top to bottom between the next electrodes 11 and 12 (between the electrodes 12 and 11)). In addition, the flow holes 11b and 12b allow the atomized water flow to the next electrodes 11 and 12 (between the electrodes 12 and 11) by the airflow of the oxygen hydrogen mixed gas. Furthermore, the flow holes 11b and 12b can allow the oxygen hydrogen mixed gas produced between the electrodes 11 and 12 by electrolyzing to flow. That is to say, the flow holes 11b and 12b allow any one of the water supplied from the water supply section 22, the atomized water and the oxygen hydrogen mixed gas produced by electrolyzing to flow (the flow holes 11b and 12b allow the water supplied from the water supply section 22 and/or the atomized water to flow; more specifically, the flow holes 11b and 12b allow the water supplied from the water supply section 22, the atomized water, or the oxygen hydrogen mixed gas produced by electrolyzing to flow). The flow holes 11b and 12b are rectangular (rectangular).

Further, a gas outflow hole 12c for the outflow of the oxygen hydrogen mixed gas is provided on the upper side of the electrode 12($\lambda$) closest to the downstream side, and a water outflow hole 12a for the outflow of water is provided on the lower side. The gas outflow hole 12c is rectangular (rectangular), and the water outflow hole 12a is circular. The oxygen hydrogen mixed gas flowing out of the gas outflow hole 12c is conveyed to a first water storage section 21a. In addition, the water flowing out of the water outflow 12a is also conveyed to the first water storage section 21a.

The flow holes 11b, 12b and the gas outflow hole 12c are arranged to extend in slits and long strips manner along a width direction and, more specifically, along a direction intersecting the flow direction of water etc.. For the flow holes 11b, 12b and the gas outflow hole 12c, it is preferable that the ratio A of the length dimension (length dimension in the width direction) X' of the side to the length dimension (length dimension in the width direction) X of the side of electrodes 11 and 12 shown in mathematical formula 1 is 0.6-0.9, preferably is 0.7-0.8. It is preferable that the ratio B of the length dimension Y' of the height direction to the length dimension X' of the side shown in mathematical formula 2 is 0.02-0.1, more preferably is 0.04-0.08, further preferably is 0.05-0.07. It is preferable that the ratio C of the length dimension Y' of the height direction to the length dimension Z of the gap between the electrodes 11 and 12 is 1-5, more preferably is 1.5-2.5.

[Mathematical Formula 1]

$$A = X'/X$$

[Mathematical Formula 2]

$$B = Y'/X'$$

[Mathematical Formula 3]

$$C = Y'/Z$$

Here, the electrodes 11 and 12 are provided with materials 30 used to inhibit electrolyse-based corrosion.

The material 30 used to inhibit corrosion arranged in the through holes 11a, 12a, 11b, 12b, 12c and 15a. In more detail, the material 30 used to inhibit corrosion is arranged on the peripheral parts 11A', 11A", 12A', 12A", 11B', 11B", 12B', 12B", 12C', 12C", 15A', 15A" of the through holes 11a, 12a, 11b, 12c and 15a. The peripheral parts 11A', 11A", 12A', 12A", 11B', 11B", 12B', 12B", 12C', 12C", 15A' and 15A" of the through holes 11a, 12a, 12b, 12c and 15a include the inner peripheral parts 11A', 12A', 11B', 12B', 12C', 15A' of the through holes 11a, 12a, 11b, 12b, 12c and 15a, as well as the outer periphery parts 11A", 12A", 11B", 12B", 12C" and 15A of the through holes 11a, 12a, 11b, 12b, 12c and 15a. The material 30 used to inhibit corrosion is arranged in the inner peripheral parts 11A', 12A', 11B', 12B', 12C', 15A and in the outer peripheral parts 11A", 12A", 11B", 12B", 12C", 15A" of the through holes 11a, 12a, 11b, 12b, 12c and 15a.

The material 30 used to inhibit corrosion is a membrane structure. The material 30 used to inhibit corrosion includes at least one of rubber based materials, resin based materials, plastic based materials, acrylic based materials, fluorine based materials, silicon based materials and carbamate based materials. The electrode 11 and 12 can be coated with a liquid gasket and the material 30 used to inhibit corrosion is arranged as a membrane structure. The material 30 arranged on the outer periphery parts 11A", 12A", 11B", 12B", 12C", 15A" is coated with a width of about 8mm. That is to say, if the material 30 used to inhibit corrosion is at least arranged on the peripheral parts 11A', 11A", 12A', 12A", 11B', 11B", 12B', 12B", 12C', 12C", 15A', 15A" of the through holes 11a, 12a, 11b, 12b, 12c and 15a, the corrosion of the electrodes 11 and 12 can be inhibited (even if the material 30 used to inhibit corrosion is only arranged on the peripheral parts 11 A', 11A", 12A', 12A", 11B', 11B", 12B', 12B", 12C', 12C", 15A', 15A" of the through holes 11a, 12a, 11b, 12b, 12c, 15a, it can also inhibit the diffusion of corrosion to the electrodes 11 and 12 as a whole).

The electrolyze device 10 supplies water in the electrolyze chamber 10a through the water supply section 22 and the water inflow hole 11a, so that the electrodes 11 and 12 can be immersed in water until the upper position in the up and down direction (the lower end of the flow holes 11b and 12b). At the same time, it is a structure that can expose the position closer to the upper side than the lower end of the flow holes 11b and 12b to the air. That is to say, the electrolyze device 10 can energize the electrodes 11 and 12, and supply water from below for electrolyzing the water. Therefore, the electrolyze device 10 can produce oxygen and hydrogen from the upper side of the electrodes 11 and 12. The oxygen and hydrogen produced from the upper side of electrodes 11 and 12 are conveyed to a first water storage section 21a described later through the gas outflow hole 12c and pipes 24 and 21a".

In addition, the oxygen hydrogen mixed gas generator 1 of this embodiment has a cooling device 100 for cooling the electrodes 11 and 12. The cooling device 100 has a supply fan 101, which can cool the electrodes 11 and 12 by air cooling by supplying air to the electrodes 11 and 12.

As shown in Figure 2, the water supply device 20 has a water storage section 21 and a water supply section 22. The water storage section 21 has the function of storing water, including a first water storage section 21a and a second water storage section 21b.

That is, the water supply device 20 can supply the water stored in the first water storage section 21a to the electrodes 11 and 12 of the electrolyze device 10 from below through the water supply section 22. The second water storage section 21b functions as a supply tank of the first water storage section 21a, and can convey the water stored in the second water storage section 21b to the first water storage section 21a through a pump 21' and pipes 21a' and 21a", and then supply the water to the first water storage section 21a.

As shown in Figure 14 (a), it can be the following structure: the water supply section 22 can intermittently supply water to the electrodes 11 and 12 from below, and the electrolyze device 10 can intermittently supply water to the electrodes 11 and 12 for electrolyzing, and intermittently produce the oxygen hydrogen mixed gas from the electrodes 11 and 12.

The water supply section 22 is a structure in which the water stored in the water storage section 21 is intermittently supplied to electrodes 11 and 12 of the electrolyze device 10.

That is, the water supply section 22 has a pipe 22a and a pump 22b that allow water to flow. The pump 22b can be, for example, a tube pump that supplies water intermittently by supplying water in a pulsating manner from the tube pump. The oxygen hydrogen mixed gas can be produced intermittently by supplying water intermittently. (as described later, the pump 22b can also be a pump other than the tube pump, and further, the water discharged from pump 22b can be intermittently supplied through the opening and closing of the valve).

More specifically, the oxygen hydrogen mixed gas generator 1 is provided with a timing setting unit 22d, which synchronizes the timing of the intermittent supply of water in the water supply section 22 with the timing of the intermittent supply of DC current in a waveform control unit 53 to allow them consistent or overlapping, so as to set the supply timing.

Here, it is possible to set the water supplied to the electrolyze chamber 10a through the water supply section 22, more specifically, the water supplied to the electrodes 11 and 12 as the electrolyte, which can be formed by adding substances to the water to promote electrolysis. The substances that promote electrolysis can be sodium compounds and/or potassium compounds, the sodium compounds can be sodium hydroxide and/or sodium carbonate, and the potassium compounds can be potassium carbonate. Further, the sodium carbonate can be sodium carbonate and/or sodium bicarbonate, and the potassium carbonate can be potassium carbonate and/or potassium bicarbonate.

In addition, the water supplied through the water supply section 22 can be cluster-treated cluster water. As shown in Figure 2, the water supply device 20 has a cluster treatment unit 23 for cluster treatment of water.

The cluster treatment unit 23 is composed of a cluster plate 23a and a copper plate 23b opposed each other, so that can be filled with water between the cluster plate 23 a and the copper plate 23b for cluster treating of water. The cluster treatment unit 23 can be configured on the water storage section 21, and more specifically, on the inner wall of the first water storage section 21a.

In addition, also as shown in Figure 2, the first water storage section 21a has a first gas flow pipe 21a" (the first gas flow pipe 21a" is also used as the pipe for supplying water), and the second water storage section 21b has a second gas flow pipe 21b' and a third gas flow pipe 21b'.

That is, the first gas flow pipe 21a" can convey the oxygen hydrogen mixed gas produced by the electrodes 11 and 12 from the electrolyze device 10 to the first water storage section 21a. In addition, the second gas flow pipe 21b' can further convey the oxygen hydrogen mixed gas conveyed to the first water storage section 21a from the first water storage section 21a to the second water storage section 21b. Further, the third gas flow pipe 21b" can convey the oxygen hydrogen mixed gas conveyed to the second water storage section 21b to a burner reactor 30.

By setting such the gas flow pipes 21a' and 21b', the oxygen hydrogen mixed gas discharged from the electrolyze unit 10 can contact with water. More specifically, the oxygen hydrogen mixed gas is supplied through the gas flow pipes 21a" and 21b', so that the oxygen hydrogen mixed gas can be purified by foaming the water in the first water storage section 21a and the second water storage section 21b to remove excess water, impurities, etc. The water storage sections 21a and 21b of the water supply device 20 also function as water contact sections for contacting the oxygen hydrogen mixed gas with water.

As shown in Figure 15, the power supply device 50 has an AC power supply 51, a DC conversion unit 52 (more specifically, an AC/DC converter line 52), a waveform control unit 53 (more specifically, a pulse cut-off line 53), a polarity reversal unit 54 (more specifically, a polarity reversal line 54), and a current control unit 55 (more specifically, a current control line 55), which can supply a specified pulse current to the first electrode 11 and the second electrode 12 of the electrolyze device 10.

That is, the AC/DC converter line 52 includes a switching element, a transformer and a bridge diode, which can convert the AC current supplied from the AC power supply 51 into a DC current.

The pulse cut-off line 53 repeatedly turns on and off the DC current supplied from the AC/DC converter line 52, thereby enabling the pulse cut-off of the DC current and controlling the waveform. The pulse cut-off line 52 can form a pulse wave of a specified frequency.

The pulse cut-off line 53 includes switching elements, which can control the DC current on time and off time by switching operation of the same switching element, alternately and repeatedly carrying out the DC current on state and off state. Thus, it can control the waveform of the DC current, and more specifically, it can be used as a structure for pulse cutoff and intermittent supply of the DC current to form a specified rectangular pulse waveform.

That is, the pulse cut-offline 53 produces the oxygen hydrogen mixed gas when the DC current is switched on, and stops to produce the oxygen hydrogen mixed gas when the DC current is switched off, so it can be used as a structure for intermittently produceing the oxygen hydrogen mixed gas.

The polarity reversal line 54 can alternately reverse the polarity of the pulse wave of the DC current (more specifically, alternately reverse the positive pole and the negative pole), and simultaneously reverse the polarity of the first electrode 11 and the second electrode 12 alternately (more specifically, alternately reverse the anode and the negative pole).

The polarity reversal line 54 includes switching elements, which switches a first circuit 60 and the a circuit 70 through the switching operation of the same switching element, while alternately forming the on state of the DC current in the first circuit 60 and the second circuit 70. That is, the polarity of the first electrode 11 and the second electrode 12 (more specifically, the anode and the cathode) can be alternately reversed through the polarity reversal line 54 of the power supply device 40 to produce the oxygen from the anode and the hydrogen from the cathode.

In more detail, as shown in Figure 16, the first circuit 60 is a circuit in which the current based on the DC current flows from the first electrode 11 to the second electrode 12, the first electrode 11 is the anode, and the second electrode 12 is the cathode.

As shown in Figure 17, the second circuit 70 is a circuit in which the current based on DC current flows from the second electrode 12 to the first electrode 11, and the first electrode 11 is the cathode, and the second electrode 12 is the anode.

By switching the first circuit 60 and the second circuit 70 and alternately forming the on state of the DC current in the first circuit 60 and the second circuit 70, the polarity of the first electrode 11 and the second electrode 12 can be reversed alternately.

In addition, the polarity reversal line 54 can be operated by switching the switching elements, so that there is an off state of the direct current between the on state of the direct current based on the first circuit 60 and the on state of the direct current based on the second circuit 70.

The current control line 55 can control the direct current supplied from the power supply device 50. In more detail, the current control line 55 can control the voltage applied, so that the current value of the direct current supplied from the power supply device 50 is a specified control target value. In addition, the control target value of the current value can be set corresponding to the effective area of electrolysis in the electrodes 11 and 12.

Here, a method for forming a pulse current based on the power supply device 50 is described as follows.

That is, as shown in Figure 18 (b), the AC current from the AC power supply 51 shown in Figure 18 (a) is converted into a DC current through the AC/DC converter line 52. Next, as shown in Figure 18 (c), the DC current is smoothed by a smoothing section (a smoothing line) 52a. Next, as shown in Figure 19 (a), the pulse cutoff is performed by switching operation of the pulse cut-off line 53, and alternating reversal of polarity is performed by switching operation of the polarity reversal line 54. Next, as shown in Figure 19 (b), the voltage is applied through the current control line 55 to control the DC current.

In addition, as shown in Figure 20, the polarity reversal line 54 of the power supply device 50 is in the off state, so that also is possible to form a pulse waveform without polarity reversal. In addition, as shown in Figure 21, the pulse cut-off line 53 and the polarity reversal line 54 are in the off state, so that also form a current waveform that is always on.

The select unit 80 can select the first structure to the third structure in the oxygen hydrogen mixed gas generator 1.

That is, as shown in Figure 22, the first structure is the following structure: in the water supply device 20 of the above structure, as shown in Figure 14(b), water is continuously supplied to the electrodes 11 and 12 (Figure 22(a)); in the power supply device 50 of the above structure, as shown in Figure 19, pulse cut off is performed by switching the pulse cut-offline 53, and alternating polarity reversal is performed by switching operation of the polarity reversal line 54 (Figure 22(b)), and the oxygen hydrogen mixed gas is intermittently produced (Figure 22(c)). In addition, in the power supply device 50 of the above structure, as shown in Figure 20, the polarity reversal line 54 of the power supply device 50 is in the off state, so as to form a pulse waveform without polarity reversal.

As shown in Figure 23, the second structure is the following structure: in the water supply device 20 of the above structure, as shown in Figure 14(a), water is intermittently supplied to the electrodes 11 and 12 (Figure 23(a)); in the power supply device 50 of the above structure, as shown in Figure 21, a current waveform that is always on is formed by setting the pulse cut-off line 53 and the polarity reversal line 54 to the off state (Figure 23(b)), and intermittently produce the oxygen hydrogen mixed gas (Figure 23(c)).

The third structure is a structure in which a predetermined timing is set by the timing setting unit 22d. That is to say, as shown in Figure 24, the third structure is the following structure: in the water supply device 20 of the above structure, as shown in Figure 14(a), water is intermittently supplied to the electrodes 11 and 12 (Figure 24(a)); in the power supply device 50 of the above structure, as shown in Figure 19, the pulse cut off is performed by switching the pulse cut-offline 53, and the alternating polarity reversal is performed by switching the polarity reversal line 54 (Fig. 24(b)), and the oxygen hydrogen mixed gas is intermittently produced (Figure 24(c)). In addition, in the power supply device 50 of the above structure, as shown in Figure 20, the polarity reversal line 54 of the power supply device 50 is in the off state, so as to also form a pulse waveform without polarity reversal.

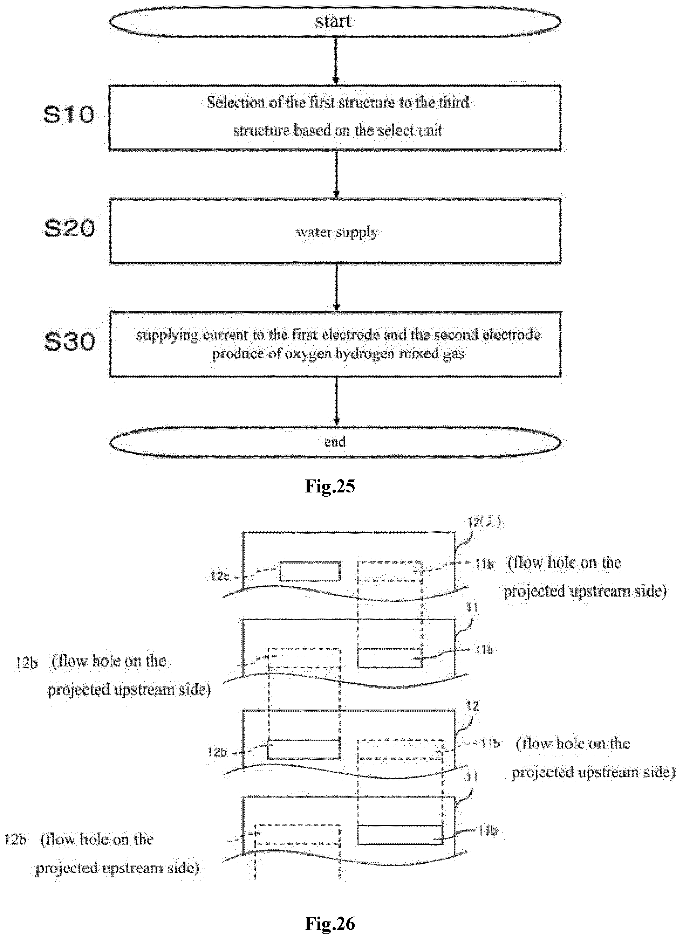

Next, a method for producing mixed gas based on the oxygen hydrogen mixed gas generator 1 configured as described above will be described based on the flowchart of Figure 25.

That is, first, in step S10, the select unit 80 selects the first structure to the third structure.

Next, in step S20, water is supplied through the water supply device 20. With regard to water supply, in the first structure, as shown in Figure 14(b), water is continuously supplied to the electrodes 11 and 12, and in the second and third structures, as shown in Figure 14(a), water is intermittently supplied to the electrodes 11 and 12.

Next, in step S30, the power supply device 50 supplies current to the electrodes 11 and 12. With regard to the supply of current, in the first structure and the third structure, as shown in Figure 19, the pulse cut off is performed by switching the pulse cut-offline 53, and the alternating polarity reversal is performed by switching the polarity reversal line 54, at the same time, the specified pulse current is supplied. In the second structure, as shown in Figure 21, the pulse cut-off line 53 and the polarity reversal line 54 are in the off state, so as to supply the current that current waveform is always on. Therefore, as shown in Figure 22(c), 23(c) and 24(c), the oxygen hydrogen mixed gas is produced intermittently. It can produce oxygen from the anode and produce hydrogen from the cathode to produce the oxygen hydrogen mixed gas.

Here, by taking in the oxygen hydrogen mixed gas produced in this way, the oxygen atoms that are ingested in the body accept electrons from the body and are actively reduced to be converted to oxygen ions that promote the body's immunity, while the hydrogen atoms release electrons to convert to hydrogen ions that confer reducing power to the cell.

In particular, hydrogen ions, as the biggest cause of various diseases, only neutralize the known hydroxyl radical (OH -) efficiently. At the same time, because electrons will be released when they are convert to ions, they can promote the reduction of cells, that is, ease aging. Since the hydrogen ion water produced in the ordinary electrolysis has released electrons in advance, although the neutralization of hydroxyl radical can be expected, the reduction force cannot be expected because there is no release of new electrons.

That is, the oxygen hydrogen mixed gas of the invention can enhance the immunity when the oxygen atom in the body is converted to oxygen ion, neutralize the hydroxyl radical when the hydrogen atom is converted to hydrogen ion, and reduce the cells based on the electron release from the hydrogen atom.

As described above, according to the oxygen hydrogen mixed gas generator 1 and the oxygen hydrogen mixed gas produce method of the present invention, the oxygen hydrogen mixed gas can be produced by the above structure.

In addition, since the power supply device 50 reverses the polarity of the first electrode 11 and the second electrode 12 alternately, the electrolysis can be carried out while reversing the polarity of the first electrode 11 and the second electrode 12 alternately, which can reduce the attachment of impurities on the electrodes. Therefore, the oxygen hydrogen mixed gas can be stably produced by electrolyzing.

Further, since the current control unit 55 controls the applied voltage so that the current value of the direct current supplied from the power supply device 50 is a specified control target value, corrosion caused by excessive current flowing through the electrodes can be reduced.

Furthermore, since the lower side of the electrodes 11 and 12 is provided with a water inflow hole 11a and a water outflow hole 12a that allow water to flow between the electrodes 11 and 12, and the upper side is provided with flow holes 11b and 12b that allow water, atomized water, or oxygen hydrogen mixed gas to flow, and the upper side is further provided with a gas outflow hole 12c that allows oxygen hydrogen mixed gas to flow, it is possible to allow water and oxygen hydrogen mixed gas to flow between the electrodes 11 and 12.

In addition, the corrosion of the electrodes 11 and 12 can be inhibited by setting the flow holes 11b and 12b as a structure that allows water to flow in the form of overflow and/or atomized water to flow. That is, the corrosion of the electrodes 11 and 12 often occurs in the holes impregnated with water, the flow holes 11b and 12b are structures that allow water to flow in the form of overflow and/or atomized water to flow, so that reduce the impregnation of flow holes 11b and 12b and inhibit the corrosion of the electrodes 11 and 12. In addition, in the electrodes 11 and 12 provided with the flow holes 11b and 12b, the water inflow hole 11a at the lower side with more water immersion can be omitted, which can further help to inhibit the corrosion of the electrodes 11 and 12.

Furthermore, since the flow holes 11b, 12b and the gas outflow holes 12c are arranged to extend in slits and long strips manner along a direction intersecting the flow direction of water etc., it is possible to increase the flow amount of water, atomized water, or the oxygen hydrogen mixed gas between the electrodes 11 and 12.

In addition, according to the invention, the corrosion of electrodes 11 and 12 can be inhibited by using the material 30 for inhibiting corrosion of the electrodes 11 and 12.

Since the material 30 used to inhibit corrosion is arranged on the peripheral parts 11A', 11A", 12A', 12A", 11B', 11B", 12B', 12B", 12C', 12C", 15A', 15A" of the through holes 11a, 12a, 11b, 12b, 12c, 15a of the electrodes 11 and 12, more specifically, since the material 30 used to inhibit corrosion is arranged on the inner peripheral parts 11A', 11B', 12A', 12B', 12C', 15A' and on the outer peripheral parts 11A", 11B", 12A", 12B", 12C", 15A" of the through holes 11a, 11b, 12a, 12b, 12c, 15a, so that can further effectively inhibit the corrosion of the electrodes 11 and 12.

Since the flow holes 11b, 12b and the gas outflow holes 12c are arranged to extend in slits and long strips manner along the direction intersecting the flow direction of water etc., although the flow amount of water, atomized water, or the oxygen hydrogen mixed gas is increased, the electrolysis of water is promoted, and the corrosion of electrodes 11 and 12 is encouraged, the corrosion of the electrodes 11 and 12 can be effectively inhibited by arranging the material 30 for inhibiting corrosion as described above.

Since the power supply device 50 has the polarity reversal unit 54 that reverses the polarity of the current alternately, although there is a concern that the oxygen hydrogen mixed gas is produced efficiently and can promote the corrosion of the electrodes 11 and 12, the corrosion of the electrodes 11 and 12 can be effectively inhibited by arranging the material 30 for inhibiting corrosion as described above.

Since the power supply device 50 has the timing setting unit 22d that sets the supply timing so that the timing of the intermittent supply of water in the water supply section 22 is consistent with or overlaps the timing of the intermittent supply of current, although there is a concern that the oxygen hydrogen mixed gas is produced efficiently and can promote the corrosion of the electrodes 11 and 12, the corrosion of the electrodes 11 and 12 can be effectively inhibited by arranging the material 30 for inhibiting corrosion as described above.

In addition, in the invention, in the electrode 11 closest to the upstream side, water flows from the lower side through the water inflow hole 11a, and in the direction where water etc. starts to flow from the electrode 12 adjacent to the electrode 11 closest to the upstream side, in the electrode 11 adjacent to the electrode 12 closest to the downstream side, water flows through the flow holes 11b and 12b in an overflow manner on the upper side, and the oxygen hydrogen mixed gas flows, in the electrode 12 closest to the downstream side, the oxygen hydrogen mixed gas flows out on the upper side through the gas outflow hole 12c, and water flows out on the lower side through the water outflow hole 11b. Therefore, although the oxygen hydrogen mixed gas can be produced efficiently, it promotes the corrosion of the electrodes 11. In this way, even if the corrosion of electrodes 11 and 12 is encouraged, the corrosion of the electrodes 11 and 12 can be inhibited by arranging the material 30 for inhibiting corrosion in the through holes 11a, 12a, 11b, 12b, 12c, 15a.

[Other embodiments of the oxygen hydrogen mixed gas generator]

Other embodiments of the oxygen hydrogen mixed gas generator of the present invention are described in detail based on Figures 26 to 30. In addition, the structure with the same label as the above embodiment and the structure with the same structure and not described below are defined as the same structure as the above embodiment.

That is, as shown in Figure 26, the oxygen hydrogen mixed gas generator 1 according to other embodiments of the present invention is arranged in such a way that the flow holes 11b, 12b and the gas outflow holes 12c are arranged in a zigzag shape between adjacent electrodes 11 and 12. More specifically, when the flow holes 11 and 12b on the upstream side in the direction of water flow etc. are projected in front and back direction to the electrodes 11 and 12 on the downstream side in the direction of water flow etc., the projected flow holes 11b and 12b on the upstream side overlap with the flow holes 11b and 12b positioned on the adjacent electrodes 11 and 12 on the downstream side and the blocked electrode parts 11b', 12b' and 12c' except for the gas flow hole 12c. The area of the flow holes 11b, 12b and the area of the gas outflow hole 12c become smaller as they are closer to the downstream side.

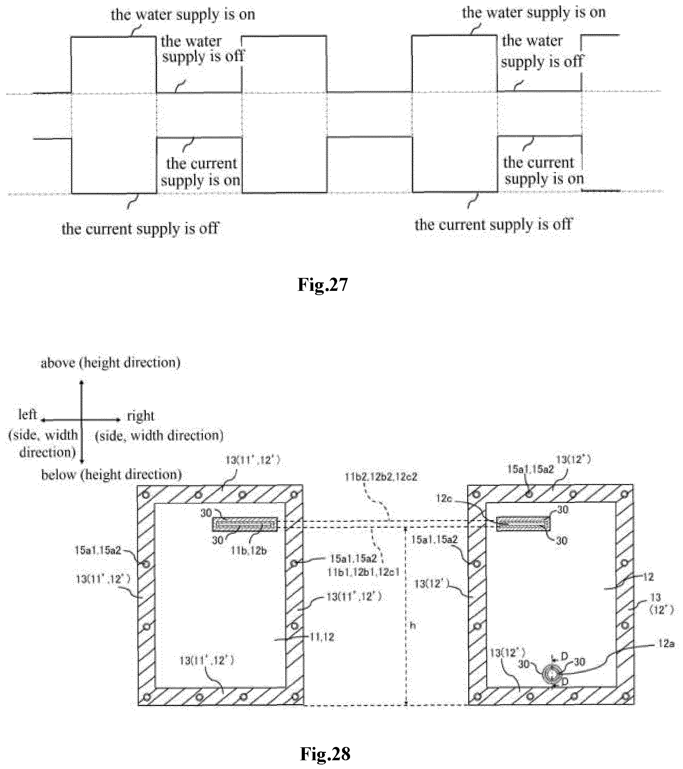

As shown in Figure 27, the positions 11b1, 12b1, 12c1 on the lower end side of the flow holes 11b, 12b and the gas outflow hole 12c are consistent between adjacent electrodes 11 and 12. In addition, the positions 11b2, 12b2, 12c2 on the upper end side of the flow holes 11b, 12b and the gas outflow hole 12c are consistent between adjacent electrodes 11 and 12. That is, the area of flow holes 11b, 12b and gas outflow hole 12c gradually decreases when they are closer to the downstream side between adjacent electrodes 11 and 12, at the same time, allow them to equal to the slit height h, while allow them to consistent with the height direction.

Here, as shown in Figure 28, the power supply device 50 of the oxygen hydrogen mixed gas generator 1 according to other embodiments can control the supply of the cut-off current when the water supply based on the water supply section 22 is on, and control the supply of the cut-on current when the water supply based on the water supply section 22 is off.

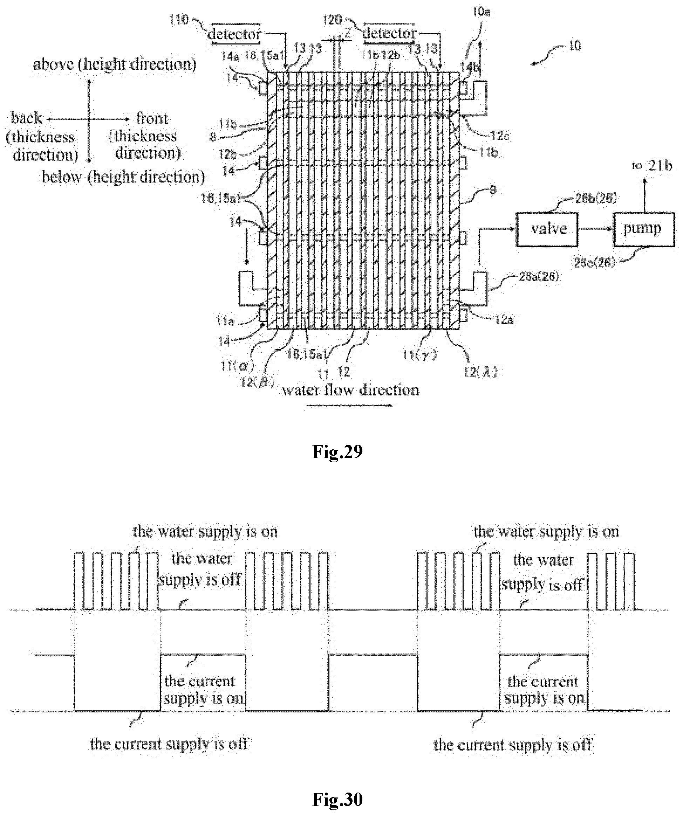

In more detail, as described above, water inflow holes 11a that allow the water supplied through the water supply section 22 to flow in are provided on the electrode 11($\alpha$) closest to the upstream side among the plurality of electrodes 11 and 12 arranged in parallel, and as shown in Figure 29, it is provided with a detector 110, which detects the liquid level of water supplied between the electrode 11($\alpha$) closest to the upstream side provided with the water inflow hole 11a and adjacent electrode 12($\beta$) on the downstream side with respect to the electrode 11($\alpha$) closest to the upstream side, the water supply section 22 supplies water based on the liquid level detected by the detector 110, and the power supply device 50 can control the supply of cut-off current when the supply of water based on the water supply section 22 is on, and control the supply of cut-on current when the supply of water based on the water supply section 22 is off.

In addition, as shown in Figure 28, when the water supply based on the water supply section 22 is on, it means that in addition to continuous water supply for a certain period, as shown in Figure 30, it also includes intermittent water supply for a certain period. On the other hand, as shown in Figure 28 and Figure 30, when the water supply based on the water supply section 22 is off, it refers to only continuous off and not intermittent off.

In addition, the liquid level includes a first liquid level and a second liquid level. When the first liquid level is higher than the second liquid level and the liquid level detected by the detector 110 is higher than the first liquid level, the water supply section 22 cuts off the water supply, and the power supply device 50 cuts on the current supply. When the liquid level detected by the detector 110 is lower than the second liquid level, the water supply section 22 cuts on the water supply, and the power supply device 50 can perform the control of cut-off the supply of current. The first liquid level is near the lower end of the flow hole 11b, and the second liquid level is near the upper end of the water inflow hole 11a.

In addition, as described above, in the oxygen hydrogen mixed gas generator 1, water outflow holes 12a allowing water to flow out that are provided on the electrode 12($\lambda$) closest to the downstream side among the plurality of electrodes 11 and 12 arranged in parallel, and as shown in Figure 29, it is provided with a water outflow section 26, which allows water supplied between the electrode 12($\lambda$) closest to the downstream side and adjacent electrode 11($\gamma$) on the upstream side with respect to the electrode 12($\lambda$) closest to the downstream side to flow out through the water outflow holes 12a, and the water outflow section 26 can discharge water intermittently.

In more detail, water outflow holes 12a allowing water to flow out that are provided on the electrode 12($\lambda$) closest to the downstream side among the plurality of electrodes 11 and 12 arranged in parallel, and it is provided with a water outflow section 26, which allows water supplied between the electrode 12($\lambda$) closest to the downstream side and adjacent electrode 11($\gamma$) on the upstream side with respect to the electrode 12($\lambda$) closest to the downstream side to flow out through the water outflow holes 12a, and it is provided with a detector 120, which detects the liquid level of water supplied between the adjacent electrodes 11($\gamma$), 12($\lambda$), and the water outflow section 26 can discharge water intermittently based on the liquid level detected by the detector 120. The water outflow section 26 is provided with a piping 26a, a valve 26b and a pump 26c for discharging water to the first water storage section 21a through the water outflow hole 12. The water can be discharged intermittently by opening and closing the valve 26b and the pump 26b.

In addition, the liquid level includes a first liquid level and a second liquid, the first liquid level is higher than the second liquid level. When the liquid level detected by the detector 120 is higher than the first liquid level, the water outflow section 26 is on that allows the water to flow out, when the liquid level detected by the detector 120 is lower than the second liquid level, the water outflow section 26 is off that not allow the water to flow out. The first liquid level can be near the lower end of the gas outflow hole 12c, and the second liquid level can be near the upper end of the water outflow hole 12a.

Since the oxygen hydrogen mixed gas generator 1 according to other embodiments of the present invention is configured according to the above method, water can be uniformly supplied to the electrodes 11 and 12 on the downstream side.

That is, in the oxygen hydrogen mixed gas generator 1 according to other embodiments, the flow holes 11b and 12b are arranged in a zigzag shape between adjacent electrodes 11 and 12. Therefore, when the atomized water flows from the electrodes 11 and 12 on the upstream side to the electrodes 11 and 12 on the downstream side through the flow holes 11b and 12b, it can flow in a way that conflicts with the blocked electrode parts of the adjacent electrodes 11 and 12 on the downstream side, and the water can really flow through the adjacent electrodes 11 and 12 on the downstream side. In addition, when the water overflows through the flow holes 11b and 12b, it can flow in a way that conflicts with the blocked electrode parts 11b', 12b' and 12c' of the adjacent electrodes 11 and 12 on the downstream side.

In addition, by arranging the flow holes 11b and 12b, when the flow holes 11b and 12b on the upstream side are projected to the adjacent electrodes on the downstream side, the projected flow holes 11b and 12b on the upstream side overlap with the flow holes 11b and 12b arranged on the electrodes 11 and 12 adjacent to the downstream side and the blocked electrode parts 11b', 12b' and 12c' except the gas outflow hole 12c, so that the atomized water can flow through, so as to really conflict with the blocked electrode parts 11b', 12b' and 12c' of adjacent electrodes 11 and 12 on the downstream side.

In addition, the area of flow holes 11b, 12b and gas outflow hole 12c is smaller as closer to the downstream side, and the flow holes 11b and 12b of the electrodes 11 and 12 and the blocked electrode parts 11b', 12b' and 12c' except for gas outflow hole 12c are as closer to the downstream side, the atomized water closer to the downstream side more likely to conflict with the blocked electrode parts 11b', 12b', and 12c' of the electrodes 11 and 12. Thus, water can be supplied uniformly to electrodes 11 and 12 on the downstream side.

Further, the position 11b1, 12b1 and 12c1 on the lower end of the flow hole 11b and 12b and the gas outflow hole 12c are consistent between the adjacent electrodes 11 and 12, so that between the adjacent electrodes 11 and 12, the area of the electrode parts just under the flow hole 11b and 12b and the gas outflow hole 12c on the lower end position 11b1, 12b1 and 12c1 is equal, and the produce efficiency of the oxygen hydrogen mixed gas is equal between the adjacent electrodes 11 and 12.

In addition, when the water supply based on the water supply section 22 is turned on, the power supply device 50 performs the control of turning off the supply of the current, and when the water supply based on the water supply section 22 is turned off, the power supply device 50 performs the control of turning on the supply of the current. More specifically, water inflow holes 11a that allow the water supplied through the water supply section 22 to flow in are provided on the electrode 11($\alpha$) closest to the upstream side among the plurality of electrodes 11 and 12 arranged in parallel, and it is provided with a detector 110, which detects the liquid level of water supplied between the electrode 11($\alpha$) closest to the upstream side provided with the water inlet hole 11a and adjacent electrode 12($\beta$) on the downstream side with respect to the electrode 11($\alpha$) closest to the upstream side, the water supply section 22 supplies water based on the liquid level detected by the detector 110, and the power supply device 50 can control the supply of cut-off current when the supply of water based on the water supply section 22 is on, and control the supply of cut-on current when the supply of water based on the water supply section 22 is off, so as to inhibit the corrosion of the electrodes 11 and 12. That is, the corrosion of electrodes 11 and 12 is easy to occur when electrolysis is carried out under the condition that water flows. By controlling the supply of cut-on current when the supply of water based on the water supply section 22 is off, electrolysis can be carried out when the flow of water is less, and the corrosion of the electrodes 11 and 12 can be inhibited. The corrosion of the electrodes 11 and 12 often occurs when the water impregnated with the water inflow hole 11a, and in the electrode 11($\alpha$) with such water inflow hole 11a, the effect for inhibiting corrosion is further increased (Obviously, the structure in the power supply device 50 of the oxygen hydrogen mixed gas generator 1 that controls the supply of cut-off current when the supply of water based on the water supply section 22 is on, and controls the supply of cut-on current when the supply of water based on the water supply section 22 is off, can just control the supply of cut-off current when the supply of water based on the water supply section 22 is on, and control the supply of cut-on current when the supply of water based on the water supply section 22 is off, without detecting the liquid level).

Furthermore, water outflow holes 12a allowing water to flow out that are provided on the electrode 12($\lambda$) closest to the downstream side among the plurality of electrodes 11 and 12 arranged in parallel, and it is provided with a water outflow section 26, which allows water supplied between the electrode 12($\lambda$) closest to the downstream side and adjacent electrode 11($\gamma$) on the upstream side with respect to the electrode 12($\lambda$) closest to the downstream side to flow out through the water outflow holes 12a, and the water outflow section 26 can discharge water intermittently. More specifically, water outflow holes 12a allowing water to flow out that are provided on the electrodes 11 and 12 closest to the downstream side among the plurality of electrodes 11 and 12 arranged in parallel, and it is provided with a water outflow section 26, which allows water supplied between the electrode 12($\lambda$) closest to the downstream side and adjacent electrode 11($\gamma$) on the upstream side with respect to the electrode 12($\lambda$) closest to the downstream side to flow out through the water outflow holes 12a, and it is provided with a detector 120, which detects the liquid level of water supplied between the adjacent electrodes 11($\gamma$), 12($\lambda$), and the water outflow section 26 can discharge water intermittently based on the liquid level detected by the detector 120, so as to inhibit the corrosion of the electrodes. That is, the corrosion of the electrodes is easy to occur when electrolysis is carried out under the condition that water flows. When the outflow of water based on the water outflow section 26 is off, the flow of water between the adjacent electrodes 11($\gamma$), 12($\lambda$) is less, which can inhibit the corrosion of the electrodes 11($\gamma$), 12($\lambda$). The corrosion of the electrodes 11($\gamma$), 12($\lambda$) often occurs when the water impregnated with the water inflow hole 11a, and in the electrode 12($\lambda$) with such water outflow hole 12a, the effect for inhibiting corrosion is further increased.

In addition, in the other embodiments described above, although the power supply device 50 of the oxygen hydrogen mixed gas generator 1 controls the supply of cut-off current when the supply of water based on the water supply section 22 is on, and controls the supply of cut-on current when the supply of water based on the water supply section 22 is off, the desired effect can also be achieved by arranging the control of water supply section 22 to reduce the water supply relatively when the current supply based on the power supply device 50 is on, and to increase the water supply relatively when the current supply based on the power supply device 50 is off.

In more detail, even if water inflow holes 11a that allow the water supplied through the water supply section 22 to flow in are provided on the electrode 11($\alpha$) closest to the upstream side among the plurality of electrodes 11 and 12 arranged in parallel, and it is provided with a detector 110, which detects the liquid level of water supplied between the electrode 11($\alpha$) closest to the upstream side provided with the water inflow hole 11a and adjacent electrode 12($\beta$) on the downstream side with respect to the electrode 11($\alpha$) closest to the upstream side, the water supply section 22 supplies water based on the liquid level detected by the detector 110, and controls the relative decrease of the water supply when the current supply based on the power supply device 50 is on, and controls the relative increase of the water supply when the current supply based on the power supply device 50 is off, which also enables electrolyzing when the water flow is less, enables inhibiting the corrosion of the electrodes (Obviously, the structure in the water supply section 22 of the oxygen hydrogen mixed gas generator 1 that controls the relative decrease of the water supply when the current supply based on the power supply device 50 is on, and controls the relative increase of the water supply when the current supply based on the power supply device 50 is off, can just control the relative decrease of the water supply when the current supply based on the power supply device 50 is on, and control the relative increase of the water supply when the current supply based on the power supply device 50 is off, without detecting the liquid level).

[Structure of the suction device]

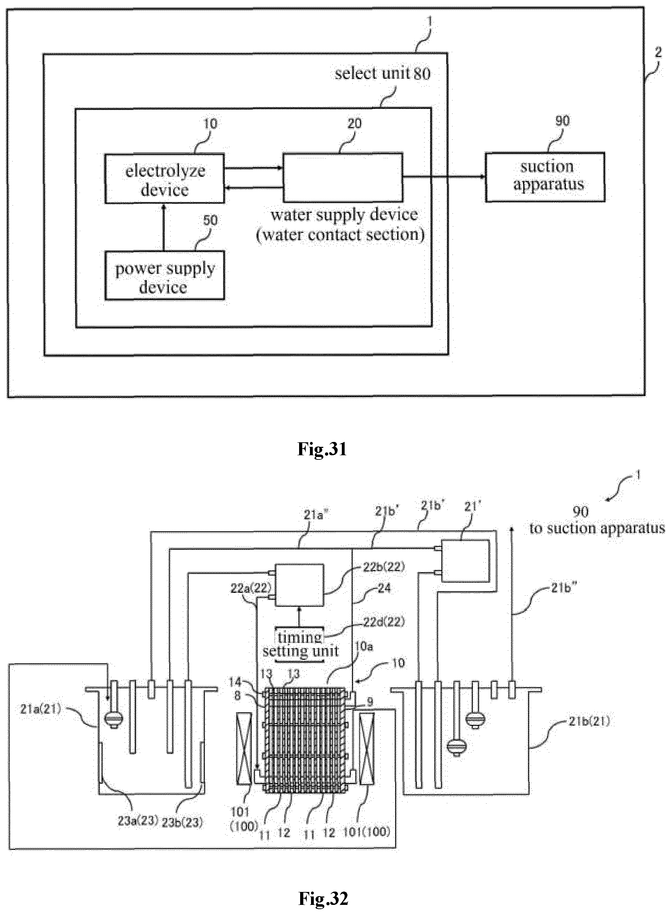

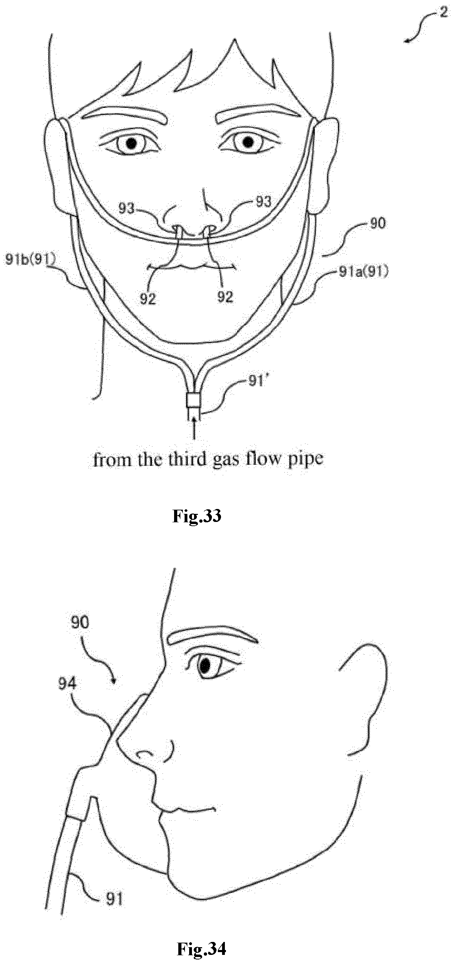

Figure 31 is a diagram showing the structure of the suction device according to the embodiment of the present invention, Figure 32 is another diagram showing the structure of the same suction device, and Figure 33 is a diagram showing the structure of the suction apparatus of the same suction device.

Referring to Figures 31 to 33, an overview of the suction device 2 according to the embodiment of the present invention is described. The suction device 2 has the above oxygen hydrogen mixed gas generator 1 and a suction apparatus 90. The oxygen hydrogen mixed gas generator 1 in Figures 31 and 32 is a structure other than the combustion reactor 30 and the generator 40, and has an electrolyze device 10, a water supply device 20, a power supply device 50, and a select unit 80.

The suction device 2 is an apparatus for taking in the oxygen hydrogen mixed gas produced by the oxygen hydrogen mixed gas generator 1, and the suction apparatus 90 is provided with a supply pipe 91 and a short pipe 93.

That is, the supply pipe 91 is a pipe used to circulate the oxygen hydrogen mixed gas produced by the oxygen hydrogen mixed gas generator 1 and supply it to a specified position. The supply pipe 91 is provided with an outlet 92 for ejecting the oxygen hydrogen mixed gas, which can take in the oxygen hydrogen mixed gas from the outlet 92.

The short pipe 93 is arranged on the side peripheral surface of the supply pipe 91 in communication with the outlet 92, and can take in the oxygen hydrogen mixed gas from the short pipe 93. There are 2 short pipes 93, which can be inserted into the nose, etc..

In addition, the supply pipe 91 has a main pipe 91', a first pipe 91a and a second pipe 91b. The main pipe 91' connects the starting end side to the third gas flow pipe 21b" of the oxygen hydrogen mixed gas generator 1. The first pipe 91a and the second pipe 91b are branch pipes that branch into two strands from the terminal end side of the main pipe 91', the starting end side is the terminal end side of the main pipe 91', and the outlet 92 is the terminal end side. The first pipe 91a and the second pipe 91b are connected in a circular manner and communicated with the terminal end side.

The suction device 2 with such structure is arranged on the face of the user in such a way that the first pipe 91a and the second pipe 91b are surrounded, so that the oxygen hydrogen mixed gas can be easily took in from the nose or the like. As mentioned above, the oxygen hydrogen mixed gas of the invention can enhance the immunity when the oxygen atom in the body is converted to the oxygen ion, neutralize the hydroxyl radical when the hydrogen atom is converted to hydrogen ion, and reduce the cells based on the electron release from the hydrogen atom. The oxygen hydrogen mixed gas of the invention can also be used as an immunity enhancer, a therapeutic agent or a preventive agent for immune diseases.

As shown in Figure 34, the suction device 2 can also be a mask 94 that is connected to the mouth and nose as a whole without branching the supply pipe 91, so that the user can take in the oxygen hydrogen mixed gas from the mouth and nose.

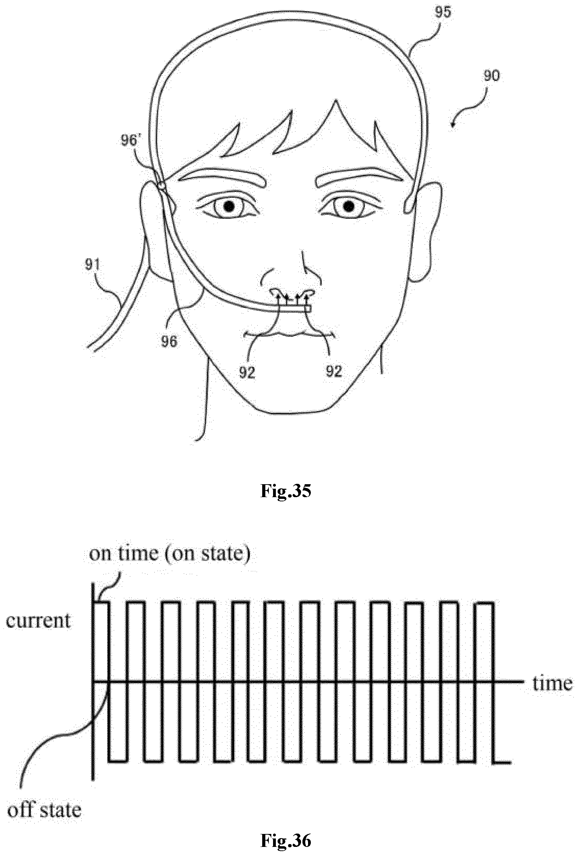

In addition, as shown in Figure 35, it is not necessary to branch the supply pipe 91 but as a whole, so that the end side of the supply pipe 91 is connected with a fixing apparatus 95. The fixing apparatus 95 is used for fixing the head of the user as a headphone, and the fixing apparatus 95 is provided with a swing pipe 96 that extends in a J shape and swings in a predetermined manner. The swing pipe 96 connects the starting end side 96' to the terminal end side of the supply tube 91, and the outlet 92 is arranged on the terminal end side to allow the oxygen hydrogen mixed gas to be ejected. The swing pipe 96 can swing with the starting end side 96' as a fulcrum and adjust the position at the same time, so that the outlet 92 is located near the user's nose, and the user can take in the oxygen hydrogen mixed gas from the nose.

In addition, it is obvious that the invention is not limited to the above embodiments, and various application implementations and deformation implementations can be carried out.

For example, in the above embodiments, the polarity reversal line 54 can be operated by switching the switching elements, so that there is an off state of the direct current between the on state of the direct current based on the first circuit 60 and the on state of the direct current based on the second circuit 70, but as shown in Figure 36, it can also be set to reverse from the on state of the direct current based on the first circuit 60 to the on state of the direct current based on the second circuit 70 basically without going through the off state.

In this case, the structure is as follows: in the on state of the DC current based on the first circuit 60, the second circuit 70 is the off state of the DC current; in the on state of the DC current based on the second circuit 70, the first circuit 60 is the off state of the DC current 60, the first circuit 60 and the second circuit 70 supply current intermittently respectively.

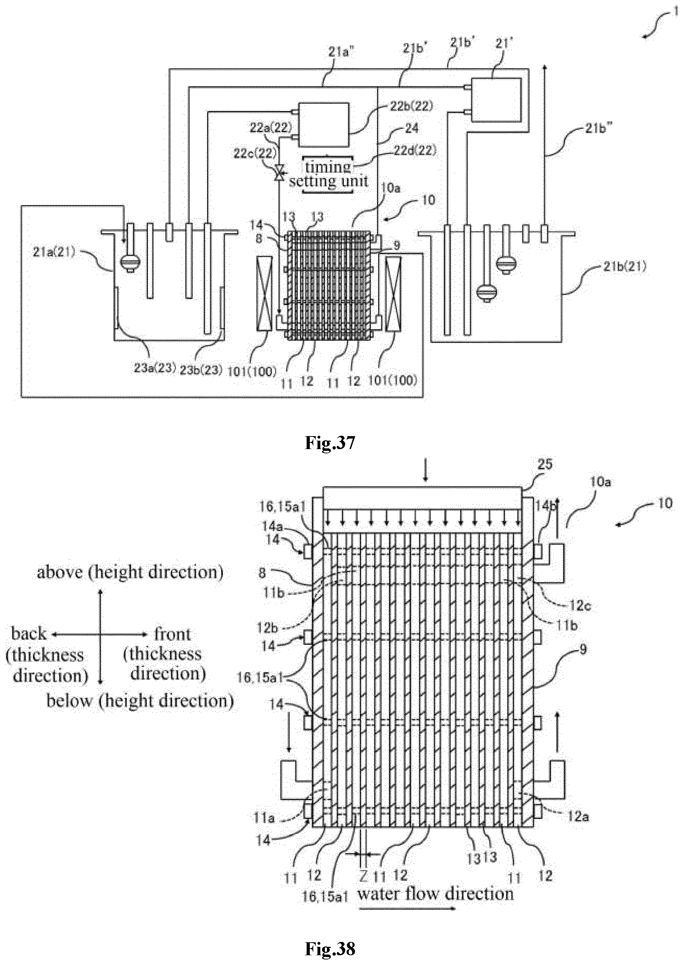

In addition, in the above embodiments, the water supply device 20 supplied water intermittently while pulsating the pump 22b as the pipe pump, but it can also be a pump other than the pipe pump. Further, as shown in Figure 37, even if a valve 22c is provided on the pipe 22a that allows water to flow, the timing setting unit 22d is used to set the specified timing on the one hand, while the valve 22c is opened and closed intermittently to supply water on the other hand, which can also achieve the desired effect.

Further, as shown in Figure 38, the water supply section 22 according to the above embodiments can also be a first water supply section 22, and has a second water supply section 25 that supplies water by sprinkling from the upper side of the electrodes 11 and 12.

In this case, the first water supply section 22 and the second water supply section 25 can supply water separately, reduce the amount of water supplied to the water inflow hole 11a, and further increase the effect of inhibiting the corrosion of the electrodes.

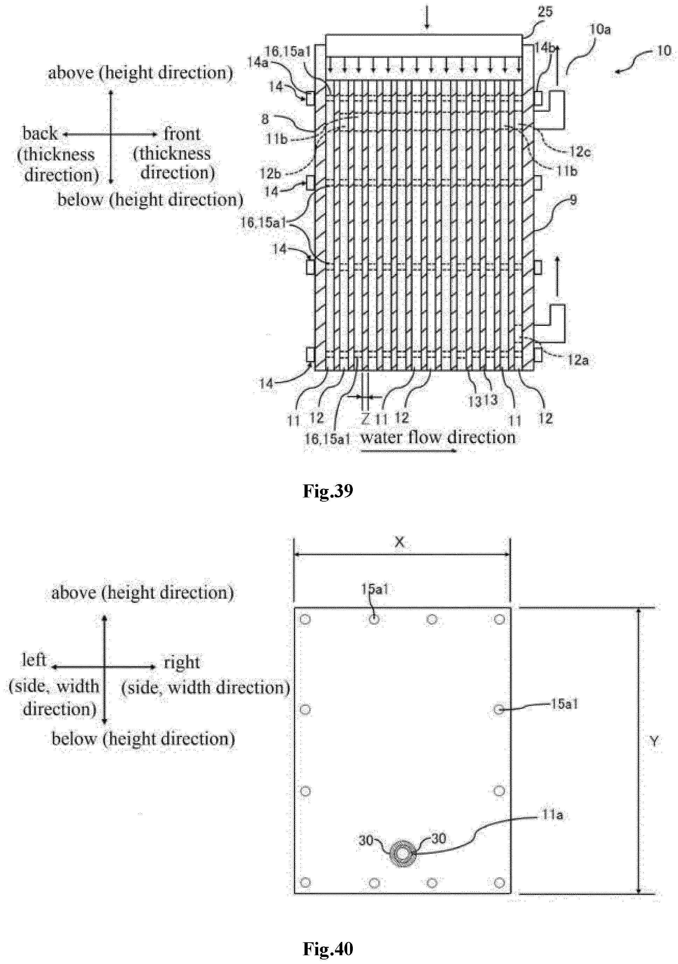

In addition, as shown in Figure 39, if the first water supply section 22 is omitted and only the second water supply section 25 is used for water supply, the water inflow hole 11a on the lower side of the electrode 11(α) which is arranged closest to the upstream side in the direction of flow of the water etc. can be omitted, which can reduce the manufacturing cost of the oxygen hydrogen mixed gas generator 1.

In addition, although not shown in the Figures, the lower side of the clamping plate 8 is provided with a water inflow hole, and the lower side of the clamping plate 9 is provided with a water outflow hole. Furthermore, a specified interval is provided between the electrode 11 and the clamping plate 8, between the electrode 12(λ) and the clamping plate 9, and the water flows in between the electrode 11(α) and the clamping plate 8 through the water inflow hole of the clamping plate 8, the water flows out between the electrode 12( λ) and the clamping plate 9 through the water outflow hole of the clamping plate 9.

In this case, the water inflow hole 11a in the electrode 11(α) and the water outflow hole 12a in the electrode 12(λ) can be omitted.

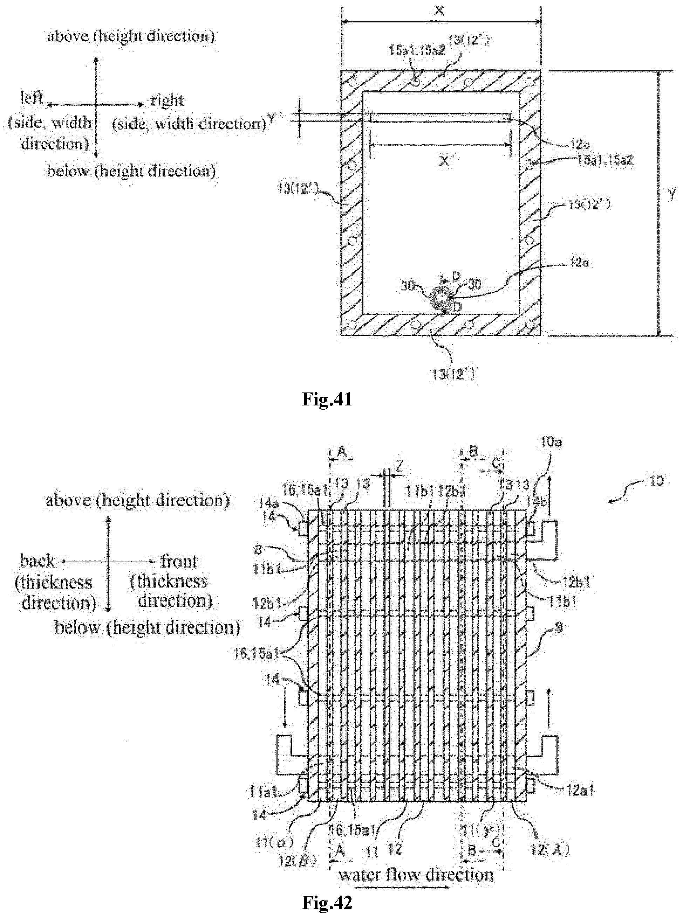

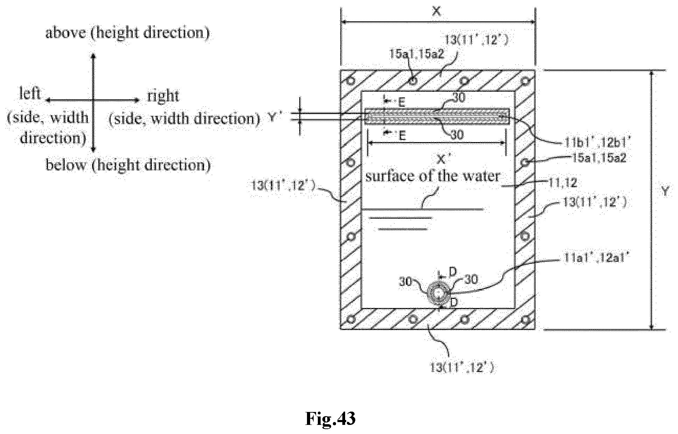

In addition, as shown in Figure 40 and Figure 41, even if the material 30 for inhibiting corrosion is provided only in the water inflow hole 11a and the water outflow hole 12a, the desired effect can be achieved. Further, in the above embodiments, a water inflow hole 11a that allows water to flow in is provided on the lower side of the electrode 11(α) closest to the upstream side in the direction of water etc. flowing, and flow holes 11b and 12b are provided on the electrode 11(α) closest to the upstream side, in the direction of water etc. flowing from the adjacent electrode 12(β), and provided on the upper side of the electrode 11(γ) adjacent to the electrode 12(λ) closest to the downstream side, which allow water to flow in the manner of overflow and allow the oxygen hydrogen mixed gas to flow, and a gas outflow hole 12c is provided on the upper side of the electrode 12(λ) closest to the downstream side, which allows the oxygen hydrogen mixed gas to flow out, and a water outflow hole 12a is provided on the lower side, which allows water to flow out. However, as shown in Figure 42 and Figure 43, water flow holes 11a1' and 12a1' for the water flowing are provided on the lower side of all electrodes 11 and 12 and between the electrodes 11 and 12, and gas flow holes 11b1' and 12b1' for the flow of the oxygen hydrogen mixed gas are provided on the upper side. The electrolyze device 10 supplies water through the water supply section 22 and the water flow holes 11a1' and 12a1'. Therefore, a structure can be arranged to immerse the electrodes 11 and 12 in water until they reach the middle position in the upper and lower directions, while the upper side is exposed to the air. The gas flow holes 11b1' and 12b1' extend in slits and long strips manner along the direction intersecting the flow direction of water etc.. The ratio (A) of the side dimension (X') of the gas flow holes 11b1' and 12b1' to the side dimension (X) of the electrodes 11 and 12 is 0.6-0.9, the ratio B of the height dimension (Y') of the gas flow holes 11b1' and 12b1' to the side dimension (X') of the gas flow holes 11b1' and 12b1' is 0.02-0.1, the ratio C of the height dimension (Y') of the gas flow holes 11b1' and 12b1' to the dimension (Z) of the gap between the electrodes 11 and 12 is 1-5, which can also achieve the desired effect.

Description Of Symbols

α : the electrode closest to the upstream side in the direction of water etc. Flow
β : the electrode adjacent to the electrode closest to the upstream side
γ : the electrode adjacent to the electrode closest to the downstream side
λ : electrode closest to the downstream side
A: ratio of X' to X

X: side dimension of electrodes 11 and 12

X': side dimension of the gas flow holes 11b and 12b

B: ratio of Y' to X'

X ': height dimension of the gas flow holes 11b and 12b

C: ratio of Y' to Z

Y: height dimension between the electrodes 11 and 12

Y': height dimension of the gas flow holes 11b and 12b

Z:dimension of gap between the electrodes 11 and 12

h: slit height

1: oxygen hydrogen mixed gas generator

2: suction device

8. 9: clamping plate

10: electrolyze device

10a: electrolyze chamber

11: first electrode

11': edge

11a, 11a1': water inflow hole

11A: peripheral part

11A': inner peripheral part

11A": outer peripheral part

11b, 11b1': flow hole

11b1: lower end position

11b2: upper end position

11b': blocked electrode part

12: second electrode

12': edge

12a, 12a1': water outflow hole

12A: peripheral part

12A': inner peripheral part

12A": outer peripheral part

12b, 12b1': flow hole

12b1: lower end position

12b2: upper end position

12b': blocked electrode part

12c: gas outflow hole

12c1: lower end position

12c2: upper end position

12c': blocked electrode part

13: sealing ring

14: fastening component

14a: bolt

14b: nut

15a1, 15a2, 15a3: through hole

15a2': inside

16: pipe component

16a: outer surface side

20: water supply device

21: water storage section

2 1': pump

21a: first water storage section

21 a': first gas flow pipe

21a": pipe

21b: second water storage section

21b': second gas flow pipe

21b": third gas flow pipe

22: water supply section (first water supply section)

22a: pipe

22b: pump

22d: timing setting unit

23: cluster treatment unit

23a: cluster plate

23b: copper plate

24: pipe

25: second water supply section

26: water outflow section

26a: piping

26b: valve

26c: pump

30: material for inhibiting corrosion

35: subject

40: generator

50: power supply device

51: AC power supply

52: DC convert unit

52a: smoothing section

53: waveform control unit

54: polarity reversal unit

55: current control unit

60: first circuit

70: second circuit

80: select unit

90: suction apparatus

91: supply pipe

9 1': main pipe

91a: first pipe

91b: second pipe

92: outlet

93: short pipe

94: mask

95: fixing apparatus

96: swing pipe

96': starting end side

100: cooling device

101: supply fan

110, 120: detector

**Claims**

1. An oxygen hydrogen mixed gas generator, which comprises: an electrolyze device, which uses electrodes to electrolyze water; and a power supply device, which supplies a specified current to the electrodes, the oxygen hydrogen mixed gas generator produces the oxygen hydrogen mixed gas, which is **characterized in that**,
a plurality of said electrodes are arranged in parallel at specified intervals, and flow holes are arranged in the said electrodes to allow said water to flow in the form of overflow and/or to allow atomized water to flow.

**2.** The oxygen hydrogen mixed gas generator according to claim 1, which is **characterized in that**, the flow holes are arranged between the adjacent electrodes in a zigzag shape.

**3.** The oxygen hydrogen mixed gas generator according to claim 1, which is **characterized in that**, the flow holes are arranged so that when the flow holes which on the upstream side are projected to an electrode adjacent to the downstream side, the projected flow holes which on the upstream side overlap with the occluded electrode portions positioned beyond the flow holes which on the adjacent electrodes on the downstream side.

**4.** The oxygen hydrogen mixed gas generator according to claim 3, which is **characterized in that**, the area of the flow holes closer to the downstream side that becomes smaller.

**5.** The oxygen hydrogen mixed gas generator according to claim 4, which is **characterized in that**, the positions of the lower end sides of the flow holes are consistent between the adjacent electrodes.

**6.** The oxygen hydrogen mixed gas generator according to claim 1, which is **characterized in that**, the flow holes are arranged as the through holes, and a material for inhibiting corrosion is arranged at the periphery of the through holes at least.

**7.** The oxygen hydrogen mixed gas generator according to claim 6, which is **characterized in that**, the material for inhibiting corrosion can be arranged at the periphery of the through holes in a film form.

**8.** The oxygen hydrogen mixed gas generator according to claim 7, which is **characterized in that**, a liquid liner is coated at the periphery of the through holes and the material for inhibiting corrosion can be arranged at the periphery of the through holes in a film form.

**9.** The oxygen hydrogen mixed gas generator according to claim 1, which is **characterized in that**, has a water supply section that supplies water intermittently to the electrodes, and the electrolyze device can be arranged as a structure that supplies water intermittently to the electrodes.

**10.** The oxygen hydrogen mixed gas generator according to claim 1, which is **characterized in that**, the flow holes extend in a long strip along the direction which intersects with the flow direction of water.

**11.** The oxygen hydrogen mixed gas generator according to claim 1, which is **characterized in that**, the power supply device has the following structure:

controlling the switching time of the current, controlling the waveform of the current, and supplying the current intermittently.

**12.** The oxygen hydrogen mixed gas generator according to claim 9, which is **characterized in that**, the power supply device performs the control of switching off the supply of current when the water supply of the water supply section is switched on, and performs the control of switching on the supply of current when the water supply of the water supply section is switched off.

**13.** The oxygen hydrogen mixed gas generator according to claim 12, which is **characterized in that**,

the water inflow holes are provided for allowing the water supplied by the water supply section to flow in, and
a detector is provided, which detects the level of water supplied between the electrode closest to the upstream side among the plurality of electrodes arranged in parallel and adjacent electrode on the downstream side with respect to the electrode closest to the upstream side,
the water supply section supplies water based on the level detected by the detector, the power supply device performs the control of switching off the supply of current when the water supply of the water supply section is switched on, and performs the control of switching on the supply of current when the water supply of the water supply section is switched off.

**14.** The oxygen hydrogen mixed gas generator according to claim 13, which is **characterized in that**, the water supply section performs the control of reducing the supply of water relatively when the current supply of the power supply device is switched on, and performs the control of increasing the supply of water relatively when the current supply of the power supply device is switched off.

**15.** The oxygen hydrogen mixed gas generator according to claim 14, which is **characterized in that**,

water inflow holes are provided for allowing the water supplied by the water supply section to flow in, and
a detector is provided, which detects the level of water supplied between adjacent electrodes, the water supply section supplies water based on the level detected by the detector, and the water supply section performs the control of reducing the supply of water relatively when the current supply of the power supply device is switched on, and performs the control of increasing the supply of water relatively when the current supply of the power supply device is switched off.

16. The oxygen hydrogen mixed gas generator according to claim 1, which is **characterized in that**,

    water outflow holes are provided for allowing the water to flow out, and
    it is provided with a water outflow part, so that water supplied between the electrode closest to the downstream side among the plurality of electrodes arranged in parallel and adjacent electrode on the upstream side with respect to the electrode closest to the downstream side flows out through the water outflow holes,
    the water outflow part intermittently flows out of the water.

17. The oxygen hydrogen mixed gas generator according to claim 1, which is **characterized in that**,

    it is provided with water outflow holes allowing the water to flow out, and
    it is provided with a water outflow part, so that water supplied to the electrodes closest to the downstream side and the adjacent electrodes on the upstream side relative to the electrodes closest to the downstream side among the plurality of electrodes arranged in parallel that flows out through the water outflow holes, and
    it is provided with a detector to detect the liquid level of the water supplied to the adjacent electrodes,
    the water outflow part intermittently flows out the water based on the liquid level detected by the detector.

18. The oxygen hydrogen mixed gas generator according to claim 1, which is **characterized in that**,
    a sealing ring is clamped between the edges of adjacent electrodes, and through holes are arranged at the edge of the electrodes and on the sealing ring, and a pipe component is inserted through the through holes at the edge of the electrodes and the through holes of the sealing ring, at the same time, a fastening component is further inserted through the pipe component, the edges of the electrode are fastened in a manner of crimping by clamping the sealing ring between the edges of the adjacent electrodes by the fastening component.

19. The oxygen hydrogen mixed gas generator according to claim 18, which is **characterized in that**,
    the oxygen hydrogen mixed gas generator is configured that the hole diameter of the through holes of the sealing ring is approximately equal to the outer diameter of the pipe component inserted into the through holes of the sealing ring, and the sealing ring is composed of elastic materials, the edges of the electrodes are fastened in a manner of crimping by clamping the sealing ring between the edges of the adjacent electrodes by the fastening component, so that the through holes of the sealing ring extend more inward, and the hole diameter of the through holes of the seal ring is smaller, and the outer surface side of the pipe component is close to the inner side of the through holes of the seal ring.

**Fig.1**

**Fig.2**

above (height direction)

back
(thickness direction)

front
(thickness direction)

below (height direction)

water flow direction

**Fig.3**

above (height direction)

left
(side, width
direction)

right
(side, width direction)

below (height direction)

**Fig.4**

Fig.5

Fig.6

above (height direction)

left (side, width direction)    right (side, width direction)

below (height direction)

**Fig.7**

above (height direction)

left (side, width direction)    right (side, width direction)

below (height direction)

**Fig.8**

22

above (height direction)

left
(side, width
direction)

right
(side, width direction)

below (height direction)

**Fig.9**

(b)

(a)

**Fig.10**

(a)

30

11b,12b,12c

30

(b)

11B′,12B′,12C′    11,12
                  11B″,12B″,12C″
30                30
11B″,12B″,12C″    11b,12b,12c
30                30
30                11B″,12B″,12C″
                  30
11B″,12B″,12C″    11,12

11B′,12B′,12C′

**Fig.11**

(a)

15A′
30    15a1
      30

(b)

15A′    11,12
        15A″
30      30
15A″    15a1
30
30      30
30      15A″
        30
15A″    11,12

15A′

**Fig.12**

**Fig.13**

**Fig.14**

**Fig.15**

**Fig.16**

70(50)

DC convert unit — 52

smoothing section — 52a

waveform control unit — 53

polarity reversal unit — 54

current control unit — 55

first electrode — 11

second electrode — 12

51

**Fig.17**

(a)

current

time

(b)

current

time

(c)

current

time

**Fig.18**

**Fig.19**

**Fig.20**

current

$\Delta A$

time

**Fig.21**

on time (on state)

（a）

water supply

time

（b）

current

time

off time (off state)

on time (on state)

（c）

gas production

time

**Fig.22**

**Fig.23**

opening time (open state) (a)    block time (block state)

water supply

time

(b)

current

time

off time (off state)    on time (on state)

(c)

gas produce

time

**Fig.24**

S10 | Selection of the first structure to the third structure based on the select unit

S20 | water supply

S30 | supplying current to the first electrode and the second electrode produce of oxygen hydrogen mixed gas

start

end

**Fig.25**

12(λ)

12c

11b (flow hole on the projected upstream side)

11

11b

12b (flow hole on the projected upstream side)

12

12b

11b (flow hole on the projected upstream side)

11

12b (flow hole on the projected upstream side)

11b

**Fig.26**

the water supply is on

the water
supply is off

the current
supply is on

the current supply is off

the water supply is on

the water
supply is off

the current
supply is on

the current supply is off

**Fig.27**

above (height direction)

left
(side, width
direction)

right
(side, width direction)

below (height direction)

13(11',12')

11b2,12b2,12c2

15a1,15a2    13(12')

12c

30

30

30

30

11b,12b

15a1,15a2
11b1,12b1,12c1

15a1,15a2

15a1,15a2

13(11',12')

13(11',12')

13(12')

13(11',12')

11,12

h

12

13
(12')

12a

13(12')

30

D

30

D

13(11',12')

**Fig.28**

EP 4 180 556 A1

**Fig.29**

**Fig.30**

select unit 80

10

electrolyze device

20

water supply device
(water contact section)

90

suction apparatus

50

power supply device

1

2

**Fig.31**

21a"    21b'    21b'    21'

90
to suction apparatus

1

22b(22)

22a(22)

24

22d(22)

21b"

timing setting unit

10a

10

14
8

13  13

9

21a(21)

21b(21)

23a(23) 23b(23)

101
(100)  11  12  11  12  101(100)

**Fig.32**

EP 4 180 556 A1

from the third gas flow pipe

**Fig.33**

**Fig.34**

36

**Fig.35**

**Fig.36**

**Fig.37**

above (height direction)

back ← (thickness direction) → front (thickness direction)

below (height direction)

water flow direction

**Fig.38**

**Fig.39**

**Fig.40**

above (height direction)

left
(side, width
direction)

right
(side, width direction)

below (height direction)

X

15a1,15a2    13(12')

12c

15a1,15a2

13(12')

13(12')

12a

X'

Y'

Y

30    D    30

D

13(12')

**Fig.41**

above (height direction)

back
(thickness
direction)

front
(thickness
direction)

below (height direction)

A    Z    B    C    10a

16,15a1    13  13    11b1 12b1    13 13    14b    10

14a

14

8

11b1

12b1

14

16,15a1

14

12b1

11b1

9

11a1

14

12a1

11(α)

12(β)    16,15a1    11    12    11(γ)    12(λ)

A    B    C

water flow direction

**Fig.42**

above (height direction)

left      right
(side, width   (side, width direction)
direction)

below (height direction)

X

13(11′,12′)

15a1,15a2

E

30

E

30

11b1′,12b1′

15a1,15a2

X′

surface of the water

11,12

13(11′,12′)

13(11′,12′)

13(11′,12′)

11a1′,12a1′

30   30

D

D

Y′

Y

13(11′,12′)

**Fig.43**

41

## INTERNATIONAL SEARCH REPORT

International application No.

**PCT/JP2021/043922**

**A.    CLASSIFICATION OF SUBJECT MATTER**

*C25B 9/00*(2021.01)i; *C25B 15/02*(2021.01)i; *C25B 15/08*(2006.01)i
FI:    C25B9/00 A; C25B15/02; C25B15/08 302

According to International Patent Classification (IPC) or to both national classification and IPC

**B.    FIELDS SEARCHED**

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 3209320 U (EPOCH ENERGY TECHNOLOGY CORP.) 09 March 2017 (2017-03-09) paragraphs [0016]-[0028], fig. 5, 6 | 1-3, 5, 10, 16 |
| Y | | 6-9, 11-12, 14-15, 18-19 |
| A | | 4, 13, 17 |
| Y | JP 6-33283 A (TOYOTA CENTRAL RESEARCH & DEVELOPMENT LAB INC.) 08 February 1994 (1994-02-08) paragraph [0029], fig. 8 | 6–8 |
| Y | JP 2017-519108 A (HYDROGENICA CORPORATION LTD.) 13 July 2017 (2017-07-13) paragraphs [0018], [0028], fig. 1 | 9, 11-12, 14-15 |
| Y | JP 2020-172695 A (S.T. HOLDINGS CO., LTD.) 22 October 2020 (2020-10-22) paragraphs [0040], [0045], fig. 2, 6-7 | 18-19 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **10 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/043922**

| Patent document cited in search report | | | Publication date (day/month/year) | Patent family member(s) | | | Publication date (day/month/year) |
|---|---|---|---|---|---|---|---|
| JP | 3209320 | U | 09 March 2017 | TW | M537109 | U | |
| JP | 6-33283 | A | 08 February 1994 | US paragraphs [0028]-[0030], fig. 8 | 5401371 | A | |
| JP | 2017-519108 | A | 13 July 2017 | US paragraph [0018]-[0028], fig. 1 | 2017/0211192 | A1 | |
| | | | | WO | 2015/196263 | A1 | |
| | | | | EP | 3161186 | A | |
| | | | | BG | 111782 | A | |
| | | | | CN | 106460205 | A | |
| | | | | KR | 10-2017-0023075 | A | |
| | | | | ES | 2687973 | T | |
| | | | | PL | 3161186 | T | |
| JP | 2020-172695 | A | 22 October 2020 | (Family: none) | | | |

Form PCT/ISA/210 (patent family annex) (January 2015)

**REFERENCES CITED IN THE DESCRIPTION**

**Patent documents cited in the description**

- JP 2002129369 A